# EUROPÄISCHE PATENTSCHRIFT

(11) **EP 0 519 421 B1**
(45) Veröffentlichungstag und Bekanntmachung des Hinweises auf die Patenterteilung: **13.09.1995**
(21) Anmeldenummer: 92110216.6
(22) Anmeldetag: 17.06.1992
(51) Int. Cl.: B65B 11/50, B29C 65/60, B65D 75/36

(54) **Verfahren und Vorrichtung zum Herstellen einer Verpackung**
Method and device for manufacturing a package
Procédé et dispositif pour fabriquer un emballage

(30) Priorität: 19.06.1991 DE 4120144; 19.06.1991 DE 4120145; 27.06.1991 DE 4121259; 27.06.1991 DE 4121260; 28.08.1991 DE 4128525; 30.08.1991 DE 4128833
(43) Veröffentlichungstag der Anmeldung: 23.12.1992
(73) Patentinhaber: Becher, Reinhard, D-70825 Korntal-Münchingen (DE)
(72) Erfinder: Becher, Reinhard, D-70825 Korntal-Münchingen (DE)
(74) Vertreter: Witte, Alexander, Dr.-Ing.

(56) Entgegenhaltungen:
- DE-A- 2 533 235
- DE-U- 8 210 702

## Beschreibung

Die Erfindung betrifft ein Verfahren zum Herstellen einer Verpackung, bei dem ein erstes, im wesentlichen flaches Teil aus einem ersten Werkstoff mit einem zweiten Teil aus Kunststoff lösbar verbunden wird, wobei das zweite Teil einen gewölbten Abschnitt und einen flachen Randbereich aufweist, insbesondere zum Herstellen einer Blisterverpackung, bei der eine Rückkartonplatte mit einer Kunststoff-Folienhaube lösbar verbunden ist, mit den Schritten:
a) Anbringen von Aussparungen in dem einen Teil;
b) Anbringen von kappenförmigen Vorsprüngen in einem flachen Abschnitt des aus Kunststoff bestehenden zweiten Teils, wobei die Vorsprünge einen zylindrischen Hohlraum und einen Bodenabschnitt aufweisen;
c) Zusammenfügen der Teile derart, daß die Vorsprünge sich durch die Aussparungen hindurch erstrecken und abschnittsweise über diese vorstehen; und
d) Umformen der vorstehenden Abschnitt durch Andrücken erster Stempel zu verbreiterten Wülsten, die Ränder der Aussparungen des einen Teils umgreifen.

Die Erfindung betrifft ferner eine Vorrichtung zum Herstellen einer Verpackung, bei der ein erstes, im wesentlichen flaches Teil aus einem ersten Werkstoff mit einem zweiten Teil aus Kunststoff lösbar verbunden wird, wobei das zweite Teil einen gewölbten Abschnitt und einen flachen Randbereich aufweist, insbesondere zum Herstellen einer Blisterverpackung, bei der eine Rückkartonplatte mit einer Kunststoff-Folienhaube lösbar verbunden ist, mit:
a) einer Auflagefläche;
b) ersten Mitteln zum Auflegen des zweiten Teils auf die Auflage, wobei in einem flachen Abschnitt des aus Kunststoff bestehenden zweiten Teils angebrachte, einen Bodenabschnitt sowie einen zylindrischen Hohlraum aufweisende, kappenförmige Vorsprünge von der Auflagefläche weg weisen;
c) zweiten Mitteln zum Auflegen des ersten Teils auf das zweite Teil, derart, daß die Vorsprünge des zweiten Teils durch in dem ersten Teil angebrachte Aussparungen hindurchreichen und abschnittsweise darüber vorstehen; und
d) ersten Stempeln zum Andrücken und Umformen der vorstehenden Abschnitte zu verbreiterten Wülsten, die Ränder der Aussparungen des ersten Teils umgreifen.

Ein Verfahren und eine Vorrichtung der vorstehend genannten Art sind aus dem Dokument DE-A-25 33 235 bekannt.

Bei Verpackungen stellt sich heutzutage generell das Problem, die Verpackung nach dem Gebrauch zu entsorgen. Wenn es sich bei der Verpackung um eine solche handelt, die ausschließlich aus einem einzigen Werkstoff besteht, also beispielsweise ausschließlich aus Karton oder aus einem bestimmten Kunststoff, so stellen sich keine besonderen Probleme. In diesem Fall kann die Verpackung nämlich bei der heutzutage möglichen Abfalltrennung der entsprechenden Sammelstelle zugeführt werden.

Bei Verpackungen der im vorliegenden Zusammenhang interessierenden Art, die aus mehreren Werkstoffen bestehen, ist dieses Problem jedoch mitunter nicht einfach zu lösen. Dies gilt insbesondere dann, wenn eine Verpackung aus mindestens zwei Teilen aus jeweils unterschiedlichem Werkstoff besteht und die beiden Teile zwar voneinander lösbar sind, beim Lösen der beiden Teile jedoch Material aufgetrennt oder zerrissen wird. Dann entstehen nämlich beim Öffnen der Verpackung bzw. beim Lösen der beiden Teile voneinander nicht sauber getrennte Stücke aus jeweils einem einzigen Werkstoff, vielmehr ist es so, daß an mindestens einem der Teile noch Rest des jeweils anderen Teiles haften, so daß eine Werkstoffvermischung stattfinden würde, wenn man die beiden Teile getrennt in entsprechenden Annahmestellen entsorgte.

Dies gilt insbesondere für sogenannte Blisterverpackungen. Hierunter versteht man Verpackungen, bei denen eine Rückkartonplatte mit einer durchsichtigen Kunststoff-Folienhaube verbunden ist. Unter der Folienhaube befindet sich ein zu verkaufender Artikel, während auf der Rückkartonplatte die entsprechende Artikelbezeichnung und -beschreibung aufgedruckt ist.

Bei einer bekannten Art von Blisterverpackungen ist die Folienhaube mit der Rückkartonplatte großflächig in einem ebenen Randbereich der Folienhaube verklebt. Wenn man nun die Folienhaube von der Rückkartonplatte abreißt, so bleiben größere Fetzen der Rückkartonplatte an der Folienhaube kleben, mit der Folge, daß die Folienhaube nicht als reiner Kunststoffabfall entsorgt werden kann.

Entsprechendes gilt bei einer anderen bekannten Blisterverpackung, bei der die Folienhaube mit flachen Randabschnitten nach Art einer Schwalbenschwanzführung in eine entsprechende Ausprägung der Rückkartonplatte eingeschoben ist oder umgekehrt. In diesem Falle ist jedoch stets, um eine unbeabsichtigte Trennung von Rückkartonplatte und Folienhaube zu vermeiden, die Folienhaube durch ein Verbindungsmittel mit der Rückkartonplatte verbunden, beispielsweise durch eine Metallklammer.

Auch in diesem Falle wird beim Öffnen der Blisterverpackung die Folienhaube meistens von der Rückkartonplatte abgerissen, so daß im Bereich der Metallklammer ebenfalls Fetzen der Rückkartonplatte mit der Folienhaube verbunden bleiben.

Um derartige Blisterverpackungen herzustellen, gibt es verschiedene Verfahren.

Das bisher einfachste und am weitesten verbreitete Verfahren ist, die Rückkartonplatte mit einem besonderen Lack zu überziehen und die Folienhaube dann unter Wärme- und Druckeinwirkung aufzusiegeln. Eine weitere, ähnliche Möglichkeit besteht darin, die Folienhaube, wie bereits erwähnt, auf der Rückkartonplatte aufzukleben.

Nach diesem Verfahren hergestellte Blisterverpackungen haben den oben bereits erläuterten Nachteil, wobei als weiterer Nachteil hinzutritt, daß die verwendeten Lacke und Siegelmassen, die ebenfalls an beiden Teilen der Blisterverpackung haften können, zusätzliche Entsorgungsprobleme darstellen.

Ein weiteres bekanntes Herstellungsverfahren besteht darin, daß die Folienhaube zwischen zwei Rückkartonplatten gelegt wird, wobei die eine Platte eine der Ausformung der Folienhaube entsprechende Ausstanzung aufweist. Die Rückkartonplatten werden dann miteinander verklebt oder verklammert.

Eine nach diesem bekannten Verfahren hergestellte Blisterverpackung hat somit ebenfalls den bereits oben geschilderten Nachteil, daß eine saubere Trennung der Werkstoffe nach dem Aufreißen der Verpackung kaum möglich ist. Nachteilig ist ferner, daß eine sehr große Menge an Kartonplatten, nämlich die doppelte Menge, verglichen mit dem zuvor genannten Verfahren, benötigt wird.

Ein weiteres bekanntes Verfahren zum Herstellen von Blisterverpackungen sieht vor, die Folienhaube mit einem Überstand zu versehen, diesen durch die Rückkartonplatte hindurchzustecken und dann auf der Rückseite mit einem Gegenstück zu verkleben oder zu verklammern, das eine größere Fläche aufweist als die Ausstanzung in der Rückkartonplatte.

Sofern das Gegenstück aus demselben Werkstoff besteht wie die Folienhaube, kann zwar bei einer nach diesem Verfahren hergestellten Blisterverpackung eine Werkstofftrennung vorgenommen werden. Allerdings ist der Aufwand bei der Herstellung der Verpackung verhältnismäßig hoch, da zusätzlich das Gegenstück hergestellt und auch noch montiert werden muß. Dieser Nachteil erhöht sich weiter dann, wenn die Folienhaube aus Sicherheitsgründen mit mehreren Überständen an der Rückkartonplatte befestigt werden muß.

Bei einem weiteren bekannten Verfahren zum Herstellen von Blisterverpackungen werden zwei gegenüberliegende Ränder der Folienhaube um 180° in Richtung der Rückkartonplatte umgebogen. In dieses sogenannte Schiebeblister wird dann die Rückkartonplatte eingesteckt und, üblicherweise mittels Verklammern, mit der Folienhaube verbunden.

Auch eine nach diesem Verfahren hergestellte Blisterverpackung ist mit den oben ausführlich erläuterten Nachteilen hinsichtlich der Werkstofftrennung behaftet.

Aus dem Dokument DE-U- 82 10 702 ist eine Verpackung für Gegenstände bekannt. Diese bekannte Verpackung ist eine Blisterverpackung der eingangs genannten Art. Die Folienhaube dieser Blisterverpackung ist mit Vorsprüngen versehen, die im flachen Randbereich der Folienhaube angeordnet sind und durch paßgenau gestanzte Ausnehmungen in der Rückkartonplatte hindurchreichen. Zum formschlüssigen Verbinden von Folienhaube und Rückkartonplatte werden die über die Rückkartonplatte vorstehenden Abschnitte der Vorsprünge zusammen- bzw. plattgedrückt.

Da die durch die Rückkartonplatte hindurchreichenden Vorsprünge kappenförmig ausgebildet, d.h. innen hohl sind, wird der Bodenabschnitt der Vorsprünge beim Plattdrücken konkav verformt. Der Bodenabschnitt tritt daher weitgehend in den Hohlraum der Vorsprünge ein, mit der Folge, daß die ausgebildeten Wülste im wesentlichen aus dem Material des hohlzylindrischen Teils des über die Rückkartonplatte vorstehenden Abschnittes der Vorsprünge bestehen. Ein dauerhafter Halt der Folienhaube auf der Rückkartonplatte kann daher nur dann erreicht werden, wenn die Vorsprünge sich paßgenau durch die Ausstanzungen in der Rückkartonplatte hindurch erstrecken. Dies ist jedoch bei einer Massenfertigung unerwünscht bzw. nicht möglich, weil immer ein gewisses Spiel beim Zusammenfügen von Folienhaube und Rückkartonplatte vorhanden sein muß. Wenn dieses Spiel jedoch zu groß wird, kann es bei der bekannten Blisterverpackung dazu kommen, daß die ausgebildeten Wülste so klein sind, daß ein formschlüssiger Verbund nicht entsteht.

Aus dem eingangs genannten Dokument DE-A-25 33 235 ist ein zweiteiliges Behältnis, insbesondere Blisterverpackung bekannt. Diese bekannte Blisterverpackung ist von ähnlicher Bauart wie die nach dem soeben gewürdigten Dokument DE-U-82 10 702. Bei einer ersten Variante des bekannten Behältnisses werden die Vorsprünge bereits vor dem Zusammenfügen von Rückkartonblatt und Folienhaube mit umlaufenden Wülsten versehen, so daß sie nach Art eines Druckknopfes mit der Rückkartonplatte verbunden werden. Bei einer zweiten Variante werden die Vorsprünge als zylindrische Kappen mit einem Bodenabschnitt ausgebildet und nach dem Zusammenfügen von Folienhaube und Rückkartonplatte in nicht näher beschriebener Art und Weise deformiert. In jedem Falle sind die Vorsprünge dabei mit einem Bodenabschnitt versehen.

Aus dem Dokument DE-A-36 41 966 ist eine Verkaufspackung mit an einem Trägerblatt befestigten Behältnis zur Aufnahme von Waren bekannt. Auch bei dieser bekannten Verpackung, die zur Aufnahme von Nadeln dienen soll, sind an einem Behältnis zylindrische, oben konisch zulaufende Vorsprünge angeordnet, die durch entsprechende Aussparungen eines Rückkartonplattes durchgesteckt und anschließend verformt werden. Auch bei dieser bekannten Verkaufspackung stellen sich daher die bereits geschilderten Nachteile ein.

Aus dem Dokument DE-T1-32 48 862 sind ein Verfahren zum Befestigen eines aus Kunststoff gefertigten ersten Teiles, wie das Teil einer Verpackungseinheit, an ein zweites Teil sowie eine Befestigungsvorrichtung zum Durchführen des Verfahrens bekannt. Es handelt sich dabei ebenfalls um eine Blisterverpackung der eingangs genannten Art. Das besondere bei dieser Verpackung besteht darin, daß die durch die Aussparungen des Rückkartonblattes hindurchreichenden Vorsprünge der Folienhaube als mehrfach geknickte Hohlkörper ausgebildet sind, die elastisch von der Rückseite des Rückkartonblattes her umgestülpt werden können, so daß sich infolge des Umstülpens eine Querschnittsvergrößerung ergibt. Die dabei entstehenden Wülste, die den Formschluß zwischen Folienhaube und Rückkartonblatt herstellen, entstehen somit durch elastische Verformung von speziell ausgeformten hohlen Vorsprüngen. Das bekannte Verfahren hat dabei den Nachteil, daß eine hoch komplizierte Formgebung der Vorsprünge erforderlich ist, ebenso wie eine exakt aufzubringende Kraft zum Umstülpen, d.h. elastischen Verformen der genannten Vorsprünge.

Aus dem Dokument DE-A-39 25 746 ist eine Verpackungsmaschine bekannt, mit der ein becherförmiges Teil aus einer Kunststoffolie mit einem ebenen Teil aus einer Kunststoffolie zusammengefügt werden kann. Insbesondere soll dadurch ein Behältnis für Molkereiprodukte erzeugt werden. Zum Zusammenfügen der beiden aus Kunststoffolien bestehenden Teile wird am gemeinsamen flachen und aufeinanderliegenden Umfang eine druckknopfartige Verbindung hergestellt, bei der zunächst ein erster, vorne konischer Stempel beide Folienabschnitte in einer Richtung ausbeult, worauf dann ein zweiter, von der Gegenseite wirkender und vorne kugelkappenförmiger Stempel eine Gegen-Ausformung erzeugt, um somit beide Teile nach Art eines Druckknopfes zusammenzufügen.

Aus dem Dokument US-A-3 311 229 ist eine Verpackung für Tabletten bekannt, bei der die Verbindung zwischen einem becherförmigen Teil und einem flachen Teil ebenso ausgebildet ist, wie dies vorher zum Dokument DE-A-39 25 746 beschrieben wurde.

Aus dem Dokument US-A-3 771 216 sind ein Verfahren und eine Vorrichtung zum Ausbilden von Nieten bekannt, wobei zwei aufeinanderliegende ebene Bleche durch eine Anordnung mit Stempel und Gegenstempel zusammengenietet werden.

Der Erfindung liegt daher die Aufgabe zugrunde, ein Verfahren, eine Vorrichtung, eine Verpackung sowie ein Verpackungsteil der eingangs genannten Art dahingehend weiterzubilden, daß in einfacher Weise eine sicher schließende Verpackung zur Verfügung gestellt wird, bei der einerseits ein zuverlässiger Formschluß gewährleistet werden kann, andererseits aber die aus unterschiedlichen Werkstoffen bestehenden Teile beim Öffnen sauber voneinander getrennt und ohne jede Reste von Material des jeweils anderen Werkstoffs in umweltgerechter Weise einer getrennten Entsorgung und damit Wiederverwertung zugeführt werden können.

Diese Aufgabe wird gemäß dem eingangs genannten Verfahren erfindungsgemäß dadurch gelöst, daß beim Umformen der Vorsprünge die zylindrischen Innenräume mit einem zylindrischen zweiten Stempel ausgefüllt werden, so daß der Kunststoff des Bodenabschnittes zur vergrößerten Ausbildung der Wülste in einer zur Ebene des ersten Teils parallelen Ebene umgeformt wird.

Gemäß der eingangs genannten Vorrichtung wird die Aufgabe ferner gelöst durch senkrecht zu der Auflagefläche in Richting auf die ersten Stempel verfahrbare, in die Vorsprünge einführbare zweite Stempel, die in ihrem Querschnitt dem Querschnitt des zylindrischen Innenraums der hohl ausgebildeten Vorsprünge angepaßt sind, zum Umformen des Kunststoffes des Bodenabschnittes zur vergrößerten Ausbildung der Wülste in einer zur Ebene des ersten Teils parallelen Ebene.

Die der Erfindung zugrundeliegende Aufgabe wird auf diese Weise vollkommen gelöst, weil die genannten Mittel es ermöglichen, mit dem selben Materialeinsatz bzw. mit gleich dimensionierten Vorsprüngen eine deutliche Verbreiterung der umgreifenden Wülste zu erreichen, so daß der Formschluß zwischen den beiden Teilen der Verpackung deutlich erhöht wird. Dies gilt insbesondere dann, wenn die Aussparungen in dem einen Teil etwas größer sind als der Außendurchmesser der Vorsprünge des anderen Teils, weil dann beim Umformen sogar der Zwischenraum im Bereich der Aussparungen mit ausgefüllt werden kann, ohne daß dafür Material verlorengeht, das an sich zur Ausbildung der verbreiterten Wülste erforderlich wäre.

Die Maßnahme, die Stempel beim Umformen in den Innenraum der Vorsprünge anzuordnen, so daß dieser im wesentlichen ausgefüllt wird, hat den Vorteil, daß beim Umformen der verbreiterten Wülste verhindert werden kann, daß das Material des Randbereiches in den Innenraum der Vorsprünge eindringt, wo er für die Ausbildung von Randwülsten verloren wäre.

Die Erfindung hat ferner den Vorteil, daß die diversen Umformvorgänge an den Vorsprüngen mit Hilfe beweglicher Stempel ausgeführt werden können, die gleich groß wie der Innenquerschnitt der Vorsprünge sind, um während des Verformungsvorganges die gewünschten Formänderungen vornehmen zu können.

Besonders bevorzugt ist bei der erfindungsgemäßen Vorrichtung, wenn die Stempel gegen die Kraft einer ersten Feder verfahrbar sind.

Diese Maßnahme hat den Vorteil, daß die Wirkungsweise der Stempel durch entsprechende Gegenkräfte beeinflußt werden kann, indem die Federn nach Bedarf eine Stempelkraft ausüben oder von einem entsprechenden Gegenwerkzeug überdrückt werden.

Bei einer Gruppe von Ausführungsbeispielen der Erfindung werden die Bodenabschnitte nach dem Anbringen und vor dem Umformen der Vorsprünge derart durchstoßen, daß aus den kappenförmigen Vorsprüngen hohlzylindrische Elemente entstehen.

Diese Maßnahme hat den Vorteil, daß das Material der Bodenabschnitte sogleich in den Randbereich der Vorsprünge gebracht wird, wo es dann unmittelbar zu den verbreiterten Wülsten umgeformt werden kann.

Bevorzugt können hierzu die Bodenabschnitte mittels der in diesem Falle spitz ausgebildeten Stempel durchstoßen werden bzw. sind bei einer bevorzugten Ausbildung einer erfindungsgemäßen Vorrichtung die Stempel mit einer Spitze versehen.

Diese Maßnahme hat den Vorteil, daß die zum Durchstoßen der Bodenabschnitte erforderliche Kraft relativ gering dimensioniert werden kann.

Bei einer erfindungsgemäßen Vorrichtung sind hierzu die ersten und die zweiten Mittel baulich vereinigt und legen das zweite Teil zusammen mit dem ersten Teil auf, wobei eine Auflegekraft außerhalb der Vorsprünge bzw. Aussparungen derart aufgebracht wird, daß die Bodenabschnitte der Vorsprünge beim Auflegen von den Spitzen durchbohrt werden.

Diese Maßnahme hat den Vorteil, daß der Schritt des Durchbohrens sozusagen selbsttätig im Rahmen des Auflegens der beiden Teile ausgeführt werden kann.

Bei den Ausführungsbeispielen der Erfindung, bei denen die Bodenabschnitte mittels eines spitzen Stempels durchstoßen werden, ist besonders von Vorteil, wenn nach einem erfindungsgemäßen Verfahrensbeispiel die Bodenabschnitte vor dem Durchstoßen unter mechanische Zugspannung gesetzt werden. Entsprechend kann bei einer erfindungsgemäßen Vorrichtung ein in den Innenraum greifender, hohler und gegen die Kraft einer Feder abgestützter Stempel vorgesehen sein, der die Teile im Abstand von einer Auflage hält, wobei ein Niederhalter die Teile gegen die Kraft der Feder mit einer Niederhaltkraft hält, derart, daß im Bodenabschnitt mechanische Zugspannungen entstehen und ferner eine Spitze zum Aufreißen des unter Zugspannung stehenden Bodenabschnittes vorgesehen ist.

Diese Maßnahme hat den Vorteil, daß der Vorgang des Durchstoßens wesentlich erleichtert und beschleunigt werden kann, indem die zum Durchstoßen dienende Spitze auf einen Bodenabschnitt trifft, der bereits unter erheblicher mechanischer Zugspannung steht, so daß es nur noch eines geringen Anritzens bedarf, um den Boden in der gewünschten Weise zu zerreißen.

Bei einer besonders bevorzugten Ausführungsform einer erfindungsgemäßen Vorrichtung umfassen die Stempel einen Innenstempel und einen dazu konzentrischen Außenstempel, die axial gegeneinander beweglich sind.

Wenn dabei der Innenstempel spitz und der Außenstempel hohlzylindrisch ausgebildet sind, so wird einerseits das Durchstoßen des Bodenabschnittes erleichtert und andererseits durch den hohlzylindrischen Außenstempel erreicht, daß kein Material des durchstoßenen Bodenabschnittes in das Innere des Vorsprunges gelangen kann.

Bei allen genannten Ausführungsbeispielen der Erfindung mit beweglichen Stempeln können diese alternativ in einer Bohrung in der Auflagefläche laufen und/oder an einem relativ zur Auflagefläche beweglichen Druck- und Heizwerkzeug angeordnet sein.

Diese Maßnahmen haben den Vorteil, daß eine Vielfalt von möglichen kinematischen Abläufen erreicht werden kann, um die Vorgänge des Umformens und Zusammenfügens der beiden Teile zu unterstützen.

Bei einem weiteren Ausführungsbeispiel einer erfindungsgemäßen Vorrichtung sind die dritten Mittel mit einem formgebenden Gegenstück versehen, das beim Umformen des ersten Werkstoffs des Bodenabschnittes eine Einsenkung erzeugt.

Diese Maßnahme hat den Vorteil, daß beim Umformen eine aktive Verdrängung des Materials aus dem Zentrum der umgeformten Vorsprünge in den Randbereich bewirkt werden kann, in dem dort konische, zylindrische, kugelkappenförmige oder sonstige formgebende Gegenstücke eingesetzt werden, die das Material aktiv von innen nach außen verdrängen.

Über die vorstehend genannten Vorteile hinaus ist die Erfindung mit zahlreichen weiteren Vorteilen verbunden.

So ist zum Beispiel bevorzugt, wenn die Vorsprünge in einem flachen Randabschnitt einer Folienhaube einer Blisterverpackung angeordnet sind.

Diese Maßnahme hat den Vorteil, daß Blisterverpackungen in der genannten Weise ausgebildet werden können, wobei an sich übliche Gestaltung von Blisterverpackungen gewählt werden können, bei denen bereits bekannt ist, die Folienhaube mit einem gewölbten Abschnitt zur Aufnahme eines Artikels und einem vorzugsweise umlaufenden flachen Randabschnitt zu versehen.

Die vorstehenden Abschnitte der Vorsprünge bestehen aus einem thermoplastischen Material und werden bevorzugt mittels eines Heiz- und Druckwerkzeuges umgeformt.

Diese Maßnahme hat den Vorteil, daß das Verfahren auf besonders einfache Weise ausführbar ist, wobei das Umformen thermoplastischer Materialien im weichen Zustand besonders einfach und ohne große Krafteinwirkung möglich ist.

Es ist ferner besonders bevorzugt, die Vorsprünge durch Tiefziehen auszubilden, so daß diese als kappenförmige Elemente mit einem Bodenabschnitt an dem anderen Teil angebracht werden.

Diese Maßnahme hat den Vorteil, daß die bereits bekannten Tiefziehverfahren zum Ausbilden von Kunststoff-Folienhauben von Blisterverpackungen eingesetzt werden können.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht, von schräg oben, auf ein Ausführungsbeispiel einer erfindungsgemäßen Blisterverpackung;
- Fig. 2: eine Schnittdarstellung entlang der Linie II-II von Fig. 1;
- Fig. 3 und 4: im vergrößerten Maßstabe Ausschnitte aus der Darstellung gemäß Fig. 2;
- Fig. 5 bis 8: vier Phasen eines Bewegungsablaufes zur Erläuterung einer ersten Ausführungsform eines erfindungsgemäßen Verfahrens;
- Fig. 9 bis 12: vier Phasen eines Bewegungsablaufes einer zweiten Ausführungsform eines erfindungsgemäßen Verfahrens;
- Fig. 13 und 14: zwei Phasen eines Bewegungsablaufes zur Erläuterung einer dritten Ausführungsform eines erfindungsgemäßen Verfahrens;
- Fig. 15 und 16: zwei Phasen eines Bewegungsablaufes einer vierten Ausführungsform eines erfindungsgemäßen Verfahrens;
- Fig. 17 und 18: zwei Phasen eines Bewegungsablaufes einer fünften Ausführungsform eines erfindungsgemäßen Verfahrens;
- Fig. 19: eine sechste Ausführungsform mit einer erfindungsgemäßen Vorrichtung;
- Fig. 20: eine siebte Ausführungsform als Variante der sechsten Ausführungsform gemäß Fig. 19;
- Fig. 21 bis 23: drei Phasen eines Bewegungsablaufes einer achten Ausführungsform eines erfindungsgemäßen Verfahrens;
- Fig. 24 bis 27: vier Phasen eines Bewegungsablaufes einer neunten Ausführungsform eines erfindungsgemäßen Verfahrens;
- Fig. 28: im vergrößerten Maßstab eine Schnittdarstellung durch einen Vorsprung eines Verpackungsteils gemäß der Erfindung.

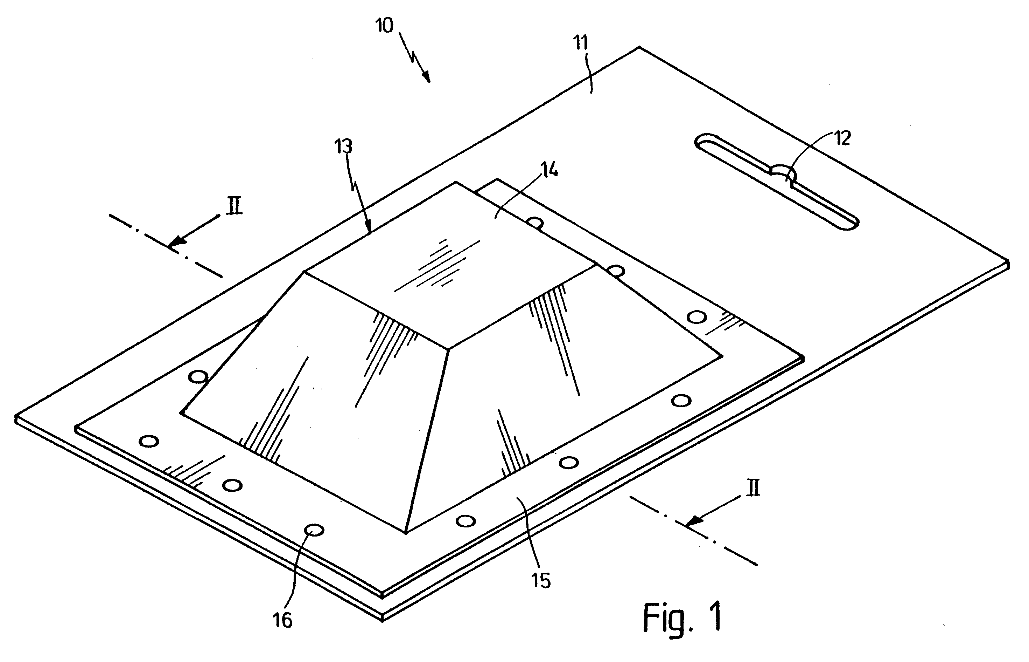

In Fig. 1 bezeichnet 10 insgesamt eine Blisterverpackung, wie sie beispielsweise verwendet wird, um Kleinteile, beispielsweise Bauelemente, Kleineisenwaren u. dgl. an geeigneten Verkaufsständern zum Verkauf feilzubieten.

Die Blisterverpackung 10 besteht im wesentlichen aus einer Rückkartonplatte 11, die am oberen Ende mit einem geeigneten Aufhängeloch 12 versehen ist, wie es für genormte Verkaufsständer vorgesehen wird.

Eine Folienhaube 13 überdeckt einen Teil der Oberfläche der Blisterverpackung 10. Die Folienhaube 13 besteht im wesentlichen aus einem ausgewölbten Bereich 14 und einem flachen, üblicherweise allseitig umlaufenden Randbereich 15. Entlang des Randbereiches 15 ist eine Vielzahl von Befestigungspunkten 16 vorgesehen, an denen die Folienhaube 13 mit der Rückkartonplatte 11 verbunden ist.

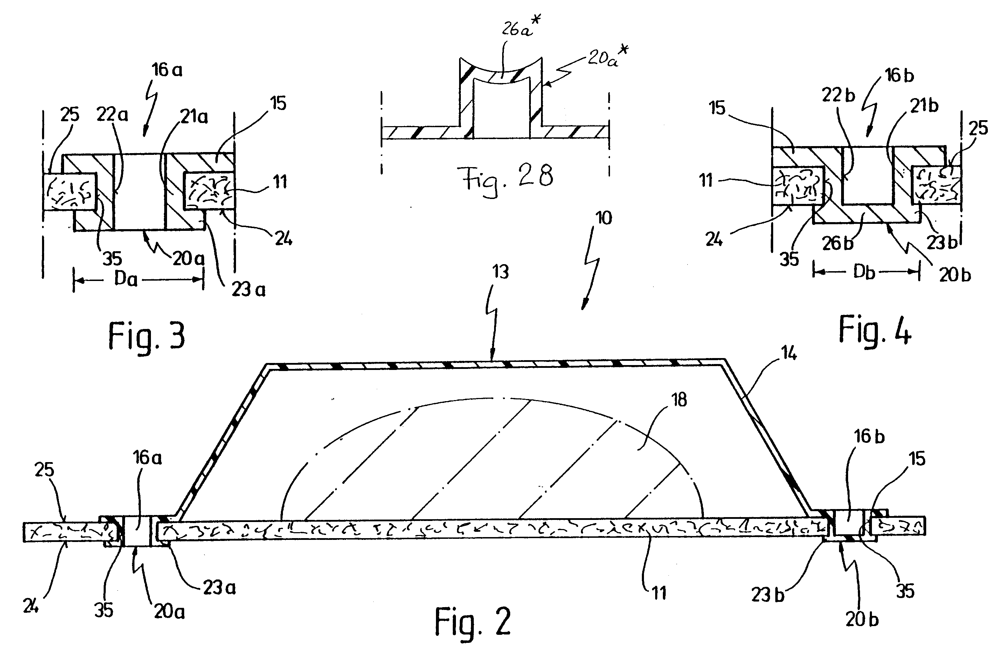

Fig. 2 veranschaulicht im Schnitt nochmals die bereits erläuterten Verhältnisse, und man erkennt zusätzlich einen Artikel 18, der vom ausgewölbten Bereich 14 der Folienhaube 13 umschlossen wird.

Fig. 2 zeigt ferner an der linken und an der rechten Seite zwei Ausführungsbeispiele erfindungsgemäßer Befestigungspunkte, die insoweit mit 16a und 16b bezeichnet sind. Weitere Einzelheiten dieser Befestigungspunkte 16a und 16b sind den vergrößerten Detaildarstellungen der Fig. 3 bzw. 4 zu entnehmen.

Danach besteht der Befestigungspunkt 16a im wesentlichen aus einem Vorsprung 20, der sich durch eine Aussparung 35 in der Rückkartonplatte 11 hindurch erstreckt. Der Vorsprung 20a weist einen hohlzylindrischen Abschnitt 21a auf, dessen Außenkontur an die Innenkontur der Aussparung 35 angepaßt ist. Typischerweise ist die Aussparung 35 kreisförmig, und der hohlzylindrische Abschnitt 21a hat die Gestalt eines Kreiszylinders. Es versteht sich jedoch, daß auch elliptische, quadratische, rechteckige oder vieleckige oder auch unregelmäßige Querschnitte verwendet werden können.

Der hohlzylindrische Abschnitt 21a umschließt einen zylindrischen Innenraum 22a.

Der hohlzylindrische Abschnitt 21a geht schließlich in einen Ringwulst 23a über.

In Fig. 3 ist mit 24 eine erste Oberfläche und mit 25 eine zweite Oberfläche bezeichnet, wobei in der Darstellung der Fig. 3 die erste Oberfläche 24 unten und die zweite Oberfläche 25 oben liegt.

Demnach liegt die Folienhaube 13 mit ihrem flachen Randbereich 15 auf der zweiten Oberfläche 25 auf, und der Vorsprung 20a erstreckt sich durch die Aussparung 35 hindurch und läuft auf der ersten Oberfläche 24 in dem Ringwulst 23a aus.

Wie deutlich aus Fig. 3 zu entnehmen ist, hat der Ringwulst 23a einen Durchmesser Dₐ, der wesentlich größer als der Innendurchmesser der Aussparung 35 ist. Folglich wird die Folienhaube 13 formschlüssig an der Rückkartonplatte 11 gehalten.

Bei dem in Fig. 2 rechts dargestellten Befestigungspunkt 16b, dessen Einzelheiten vergrößert in Fig. 4 dargestellt sind, werden dieselben Bezugszeichen wie in Fig. 3 verwendet, lediglich die Hinzufügung "a" wurde durch "b" ersetzt.

Demnach besteht der Unterschied beim rechten Befestigungspunkt 16b zum linken Befestigungspunkt 16a im wesentlich darin, daß der zylindrische Innenraum 22b nicht durchgehend ausgebildet ist, sondern vielmehr an einem Bodenabschnitt 26b endet, der sich oberhalb der ersten Oberfläche 24 befindet.

Aus technologischen Gründen, die nachstehend noch erläutert werden, ist der Durchmesser D_{b} des Randwulstes 23b am Bodenabschnitt 26b etwas kleiner als der Durchmesser Dₐ des Ringwulstes 23a gemäß Fig. 3.

In beiden Fällen ist die Anordnung so getroffen, daß zwar einerseits, wie erwähnt, die Folienhaube 13 formschlüssig an der Rückkartonplatte 11 gehalten wird, andererseits aber die Rückkartonplatte problemlos von der Folienhaube 13 gelöst werden kann, indem man diese von der Rückkartonplatte 1 abreißt. Beim Abreißen werden die Vorsprünge 20a, 20b mit ihren übergreifenden Wülsten 23a, 23b durch die Aussparungen 35 hindurchgerissen, so daß diese aufgeweitet werden. Es handelt sich somit um einen irreversiblen Vorgang, so daß sich die Blisterverpackung 10 nur für solche Anwendungsfälle eignet, in denen nur ein einmaliges Öffnen der Verpackung erforderlich ist.

Die Durchmesser Dₐ und D_{b} sind im Verhältnis zum Innendurchmesser der Aussparungen 35 und unter Berücksichtigung der jeweils verwendeten Werkstoffe so bemessen, daß beim Abreißen der Folienhaube 13 von der Rückkartonplatte 11 keine Materialreste von den Wülsten 23a, 23b mitgerissen werden.

Als Ergebnis hat man nach dem Aufreißen der Blisterverpackung 10 daher zwei getrennte Teile, nämlich zum einen die Folienhaube 13 und zum anderen die Rückkartonplatte 11, so daß man diese aus unterschiedlichen Werkstoffen (Kunststoff bzw. Karton) bestehenden Teile getrennt nach dem Prinzip der Abfalltrennung entsorgen und wiederverwerten kann.

Zum Herstellen der Blisterverpackung 10 gemäß den Fig. 1 bis 4 kann eines der nachstehend geschilderten Verfahren bzw. eine der nachstehend geschilderten Vorrichtungen verwendet werden.

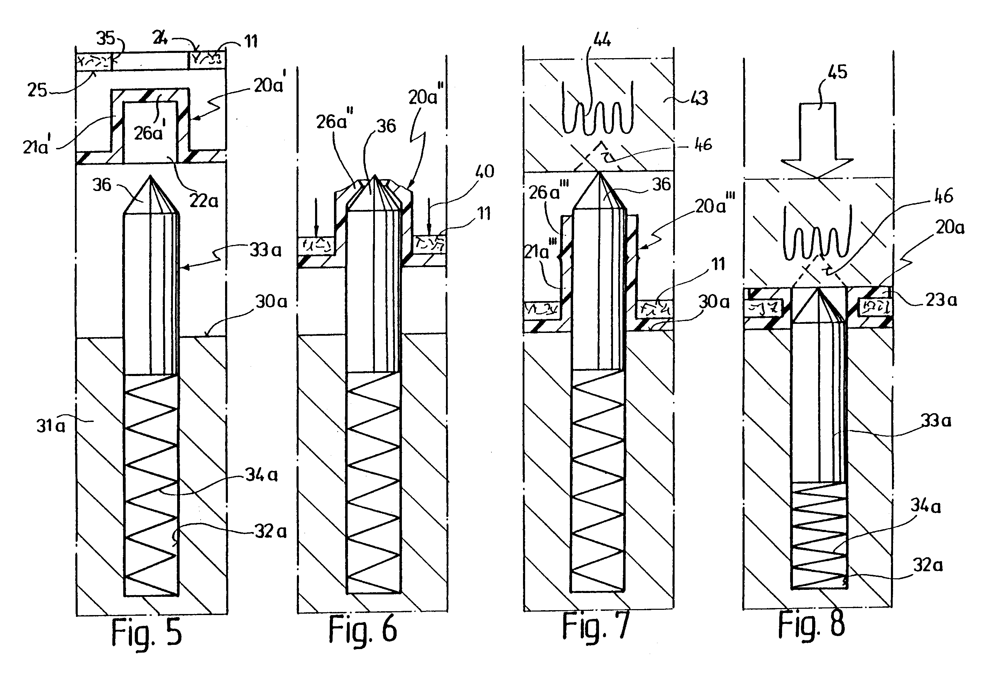

In den Fig. 5 bis 8 ist ein erstes Ausführungsbeispiel eines Verfahrens bzw. einer Vorrichtung in vier Bewegungsphasen dargestellt.

Die erste Bewegungsphase gemäß Fig. 5 zeigt eine Ausgangsstellung, bei der eine Auflagefläche 30a einer Vorrichtung 31a zu erkennen ist. In der Auflagefläche 30a ist eine zu dieser senkrechte Bohrung 32a angebracht, in der ein Stempel 33a gegen die Kraft einer Feder 34a läuft. Der Stempel 33a ist in seinem Umfang an die Form der Aussparung 35 in der Rückkartonplatte 11 angepaßt. Der Stempel 33a ist an seinem oberen Ende mit einer Spitze 36 versehen.

In einem ersten Arbeitsschritt wird nun oberhalb des gemäß Fig. 5 ausgefahrenen Stempels 33a die Folienhaube derart ausgerichtet, daß sich die Vorsprünge 20a' oberhalb der Stempel 33a befinden.

Oberhalb der Folienhaube wird die Rückkartonplatte 11 derart ausgerichtet, daß die Aussparungen 35 sich mit den Vorsprüngen 20a' im Raster befinden.

Zu diesem Zwecke wird vorzugsweise vor dem geschilderten ersten Schritt des erfindungsgemäßen Verfahrens die Rückkartonplatte 11 durch Stanzen mit entsprechenden Aussparungen 35 versehen, während die Folienhaube 13 durch Tiefziehen sowohl mit dem ausgewölbten Bereich 14 wie auch mit den Aussparungen versehen wird, die in dem Ausgangszustand gemäß Fig. 5 mit 20a' bezeichnet sind.

Die zum Handhaben und Positionieren der Folienhaube 13 bzw. der Rückkartonplatte 11 benötigten Maschinenelemente sind an sich bekannt und der Übersichtlichkeit halber in Fig. 5 nicht dargestellt.

Bringt man nun auf die Rückkartonplatte 11 Auflagekräfte auf, die in der zweiten Bewegungsphase gemäß Fig. 6 mit 40 angedeutet sind, d.h. Auflagekräfte, die außerhalb der Vorsprünge 20 bzw. der Aussparungen 35 auf die Oberfläche der Rückkartonplatte 11 drücken, so wird zum einen die Rückkartonplatte 11 mit den Aussparungen 35 über die Vorsprünge 20a' geschoben, zum anderen stößt aber auch die Spitze 36 gegen den Bodenabschnitt 26a' gemäß Fig. 5 und durchstößt diesen, wie mit 26a'' in Fig. 6 angedeutet.

Es versteht sich, daß hierzu die Steifigkeit der Feder 34a so bemessen werden muß, daß der Stempel 33a sich beim Durchstoßen des Bodenabschnittes 26a' nicht oder nur unwesentlich nach unten verschiebt.

In Fig. 7 erkennt man, daß dann, wenn die Folienhaube zusammen mit der Rückkartonplatte 11 die Auflagefläche 30a erreicht hat, der Vorsprung 20a''' vollkommen schlauchartig über den Stempel 33a gezogen ist, so daß insbesondere der hohlzylindrische Abschnitt 21a''', abgesehen von einem umlaufenden Knick, gerade in einen nun ebenfalls hohlzylindrisch umgeformten ehemaligen Bodenabschnitt 26a''' übergeht.

In diesem Zusammenhang hat sich von oben ein Heiz- und Druckwerkzeug 43 genähert. Das Heiz- und Druckwerkzeug 43 ist mit einem in Fig. 7 nur schematisch angedeuteten Heizelement 44 versehen. Durch den Kontakt zwischen dem Werkzeug 43 und der Spitze 36 kann erreicht werden (beispielsweise indem man das Werkzeug 43 am Auftreffpunkt der Spitze 36 entsprechend innenkegelig ausbildet), daß ein Wärmeübergang zwischen dem Werkzeug 43 und der Spitze 36 eintritt. Die spitze 36 kann auf diese Weise aufgeheizt werden, so daß das Durchstoßen des Bodenbereiches 26a'' gemäß Fig. 6 erleichtert wird.

Die Betätigungskraft des Werkzeuges 43, die in Fig. 8 mit einem Pfeil 45 angedeutet ist, wird so groß bemessen, daß die Feder 34a überdrückt wird und demzufolge nach unten in die Bohrung 32a hineinwandert.

Das Werkzeug 43 formt nun die Abschnitte 21a''' und 26a''' gemäß Fig. 7 in einen Ringwulst 23a um, wie er nochmals in Fig. 8 dargestellt ist. Die Spitze 36 des Stempels 33a kann dabei in eine entsprechende Ausnehmung 46 im Heiz- und Druckwerkzeug 43 eintauchen, damit kein hohler Zwischenraum zwischen der Spitze 36 und der Wand des Vorsprungs 20a verbleibt, der sich mit dem umgeformten Material der Abschnitte 21a''' und 26a''' füllen könnte.

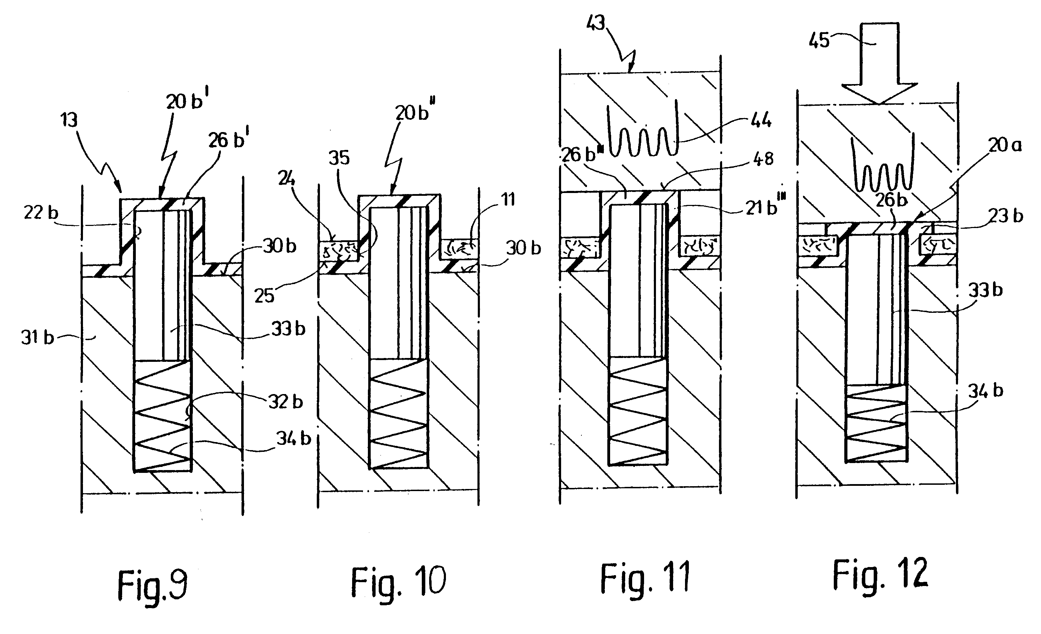

Während die zuvor beschriebene Vorrichtungen und das zugehörige Verfahren zur Ausbildung von Befestigungspunkten 16a gemäß der linken Hälfte von Fig. 2 und der Fig. 3 dienten, ist in den Fig. 9 bis 12 eine zweite Ausführungsform eines erfindungsgemäßen Verfahrens bzw. einer weiteren Vorrichtung veranschaulicht, die zum Herstellen von Befestigungspunkten 16b gemäß der rechten Hälfte von Fig. 2 bzw. der Fig. 4 eingesetzt werden können. Die dabei verwendeten Elemente sind jedoch weitgehend ähnlich, so daß wiederum übereinstimmende Bezugszeichen bei übereinstimmenden Teilen verwendet wurden.

Der wesentliche Unterschied bei der Vorrichtung und dem Verfahren gemäß den Fig. 9 bis 12 besteht darin, daß der Stempel 33b nach oben hin nicht spitz, sondern stumpf verläuft. Er füllt somit den zylindrischen Innenraum 22b in der Anfangsphase gemäß Fig. 9 vollkommen aus.

In einer zweiten Phase dieses Verfahrens gemäß Fig. 10 wird die Rückkartonplatte 11 mit ihren Aussparungen 35 über den Vorsprung 20b'' geschoben, so daß die Rückkartonplatte 11 und die Folienhaube gemeinsam auf der Auflagefläche 30b der Vorrichtung 31b aufliegen.

In einer dritten Phase gemäß Fig. 11 wird nun das Werkzeug 43 von oben niedergefahren und setzt auf eine Oberfläche 48 des Bodenabschnittes 26b''' auf.

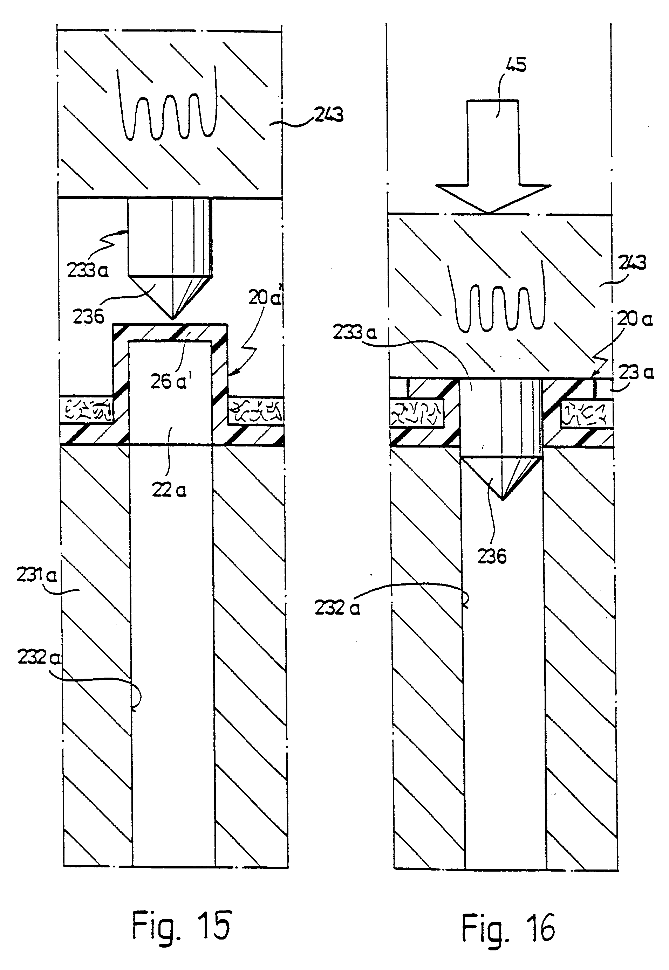

Beim weiteren Niederfahren des Werkzeuges 43 wird der Stempel 33b gegen die Kraft der Feder 34b nach unten in die Bohrung 32b eingedrückt, wie deutlich in Fig. 12 zu erkennen ist. Dabei wird der obere Bereich des hohlzylindrischen Abschnittes 21b''' (Fig. 15) nach außen verformt und bildet den Randwulst 23b.

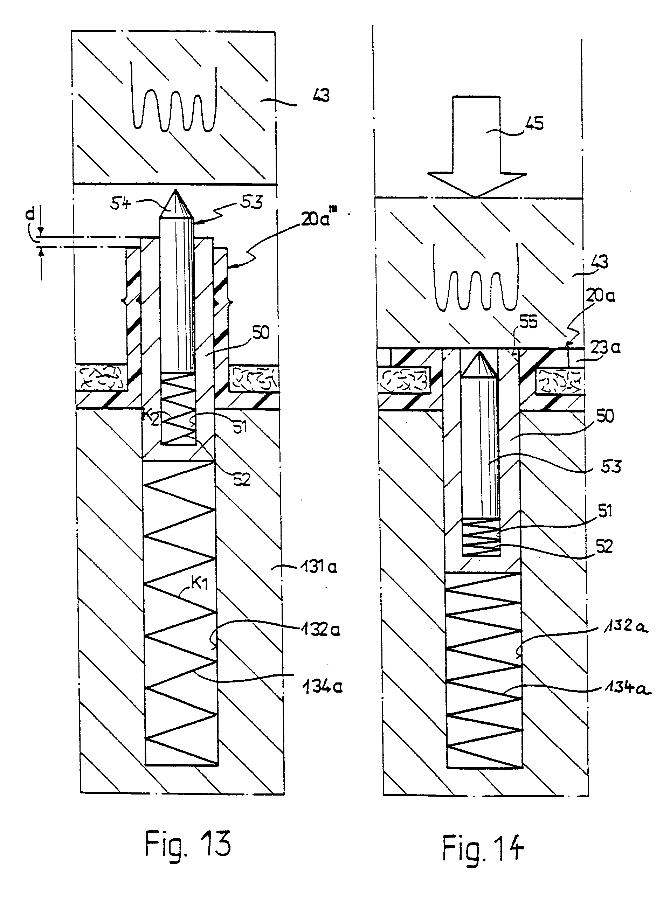

In den Fig. 13 und 14 sind für eine dritte Ausführungsform der Erfindung zwei Bewegungsphasen, ähnlich den Fig. 7 und 8 dargestellt, wobei jedoch eine geringfügig modifizierte Anordnung Verwendung findet. Bei dieser und den weiteren Ausführungsbeispielen werden wiederum gleiche bzw. um 100 oder ein mehrfaches davon erhöhte Bezugsziffern verwendet.

So erkennt man aus Fig. 13 deutlich, daß im Bereich des Stempels ein hohlzylindrischer Außenstempel 50 mit einer Bohrung 51 vorgesehen ist, in dem ein Innenstempel 53 mit einer oberen Spitze 54 gegen die Kraft einer Feder 52 läuft. Der Außenstempel 50 wiederum ist gegen die Kraft einer Feder 134a in einer Bohrung 132a abgestützt, die wiederum in der Vorrichtung 131a vorgesehen ist.

Die Wirkungsweise der Vorrichtung gemäß Fig. 13 und 14 entspricht derjenigen der zuvor anhand der Fig. 5 bis 8 geschilderten Vorrichtung vollkommen im Bereich der Bewegungsphasen gemäß den dort geschilderten Fig. 5 und 6.

Insbesondere ist dabei die Steifigkeit der inneren Feder 52 mit einer Federkonstante K₂ geringer bemessen als die Steifigkeit der äußeren Feder 134a mit einer Federkonstante K₁, so daß beim Niederfahren des Werkzeuges 143 zunächst nur der Innenstempel 53 in die Bohrung 51 eingeschoben wird.

Bemerkenswert ist ferner bei der in Fig. 13 dargestellten Bewegungsphase, daß ein geringfügiger Abstand d in der Höhe zwischen dem oberen Ende des durchstoßenen Vorsprunges 20a''' und dem oberen Ende des Außenstempels 50 besteht.

Dies bewirkt, daß beim Niederfahren des Werkzeuges 143 zunächst der Innenstempel 53 in der beschriebenen Weise in die Bohrung 51 eingeschoben wird und das Werkzeug 143 dann auf die obere Stirnseite des Außenstempels 50 aufsetzt. Auf diese Weise wird ein besonders guter Wärmeübergang erreicht. Außerdem wird sichergestellt, daß zwischen dem Werkzeug 143 und der oberen Stirnfläche des Außenstempels 50 kein Material des Vorsprunges 20a''' vorhanden ist.

Wird nun das Werkzeug 143 weiter nach unten verfahren, wie in Fig. 14 mit einem Pfeil 45 angedeutet, so wird das Material des Vorsprunges 20a''' in der bereits mehrfach beschriebenen Weise in den Ringwulst 23a umgeformt.

Wenn dabei der Außenstempel 50 an seinem Außenumfang streng zylindrisch ausgebildet ist, wird das gesamte Material des Vorsprunges 20a''' nach außen in den Ringwulst 23a umgeformt.

Wenn jedoch der Außenstempel 50 an seiner oberen Stirnseite mit einer umlaufenden Schräge 55 versehen ist, wie in Fig. 14 gestrichelt angedeutet, so wird ein Teil des Materials des Vorsprunges 20a''' auch in den so gebildeten Ringraum hinein umgeformt.

Auf diese Weise wird die Stabilität des Ringwulstes 23a erhöht. Andererseits erleichtert die Schräge 55 das Einführen des Außenstempels 50 in den Vorsprung 20 vor der in Fig. 13 dargestellten Bewegungsphase.

Den weiteren, nachstehend beschriebenen Ausführungsformen der Erfindung ist gemeinsam, daß bei all diesen Ausführungsbeispielen der Bodenabschnitt der Vorsprünge aufgerissen wird, wie dies weiter unten bereits anhand der Fig. 5 bis 8 anhand eines Ausführungsbeispiels der Erfindung dargestellt wurde und wie dies der Variante mit dem Bezugszeichenzusatz "a" in der linken Hälfte von Fig. 2 bzw. in Fig. 3 entspricht.

In den Fig. 15 und 16 ist eine dritte Ausführungsform einer erfindungsgemäßen Vorrichtung bzw. eines erfindungsgemäßen Verfahrens dargestellt.

Der Unterschied zu den zuvor geschilderten Verfahren und Vorrichtungen besteht darin, daß das Heiz- und Druckwerkzeug 243 mit einem nach unten weisenden Stempel 233a versehen ist, der an seiner unteren Stirnseite eine Spitze 236 aufweist.

Ein weiterer Unterschied hinsichtlich der Vorrichtung besteht darin, daß die Bohrung 232a in der Vorrichtung 231a durchgehend ausgebildet und frei von Einbauten ist.

Aus der in Fig. 15 dargestellten Bewegungsphase, die sinngemäß einer Bewegungsphase zwischen den Fig. 5 und 6 bei dem dort geschilderten Verfahren entspricht, nähert sich das Werkzeug 243 von oben, bis die Spitze 236 auf den Bodenabschnitt 26a' aufsetzt. Da die Spitze 236 infolge ihrer Verbindung mit dem Werkzeug 243 erwärmt ist, wird der Bodenbereich 26a thermisch aufgeweicht und mechanisch durchstoßen. Das Werkzeug 243 kann nun nach unten durchfahren, bis die Stellung gemäß Fig. 16 erreicht ist. Der Stempel 233a mit der Spitze 236 taucht nun zumindest teilweise in die Bohrung 232a ein, und am oberen Ende des Vorsprunges 20a wird der Ringwulst 23a ausgebildet.

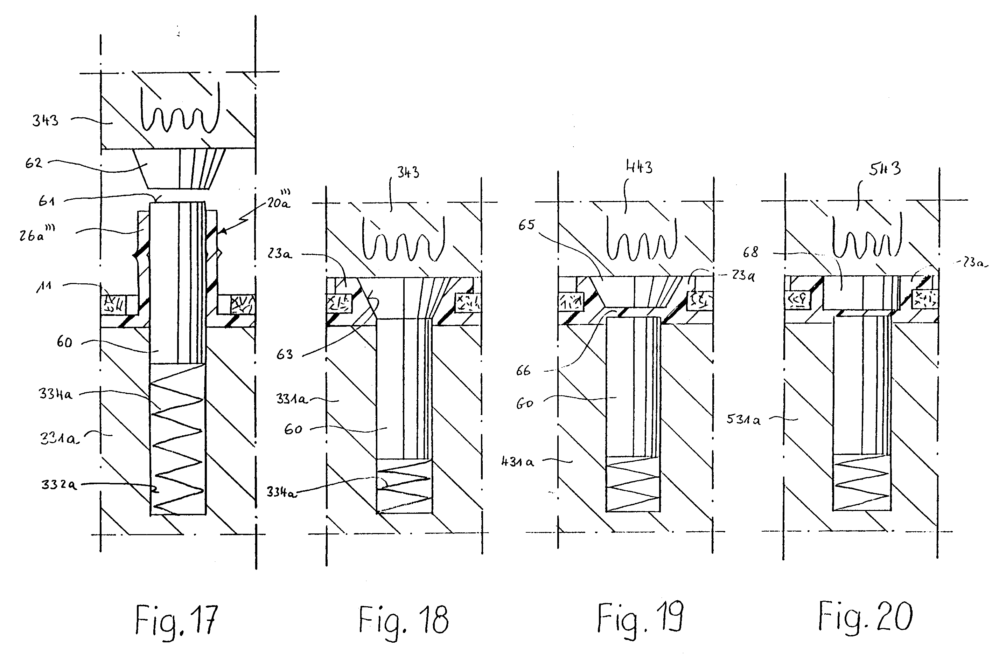

Bei der in Fig. 17 und 18 dargestellten fünften Ausführungsform der Erfindung ist ein Stempel 60 in der Bohrung 332a gegen die Kraft der Feder 334a abgestützt. Der Stempel 60 ist an seiner

Oberseite, die aus der Vorrichtung 331a herausragt, mit einer radialen, d.h. ebenen Oberfläche 61 versehen.

Das Heiz- und Druckwerkzeug 343 ist koaxial zum Stempel 60 mit einem konischen Gegenstück 62 versehen. Das Gegenstück 62 hat die Form eines Kegelstumpfes mit einer ebenfalls radialen, d.h. ebenen Oberfläche, die der Oberfläche 61 parallel gegenübersteht.

Fig. 17 zeigt die Situation, in der der Stempel 60 bereits den Vorsprung 20a''' durchstoßen hat, so daß der Bodenabschnitt 26a''' sich hohlzylindrisch nach oben verformt hat. Die Oberfläche 61 des Stempels 60 steht dabei, wie Fig. 17 deutlich zeigt, geringfügig nach oben über den umgeformten Bodenabschnitt 26a''' vor.

Das Heiz- und Druckwerkzeug 343 wird nun in der bereits beschriebenen Weise nach unten verfahren, so daß das konische Gegenstück 62 auf der Oberfläche 61 des Stempels 60 aufsetzt. Da die miteinander in Berührung kommenden Flächen radial und eben sind, besteht somit keine Möglichkeit, daß an dieser Stelle das umzuformende Material des Vorsprungs 20a''' zwischen den Stempel 60 und das Heiz- und Druckwerkzeug 343 eintritt.

Am Ende des nach unten gerichteten Hubes ergibt sich damit eine Situation, wie sie Fig. 18 zeigt. Das Heiz- und Druckwerkzeug 343 hat seine untere Endlage erreicht, in der das konische Gegenstück 62 den Stempel 60 nahezu vollkommen in die Vorrichtung 331a eingeschoben hat.

Aufgrund der Konizität des Gegenstücks 62 wird das Material des Bodenabschnittes 26a''' so umgeformt, daß eine innenkonische Fläche 63 bzw. eine kegelstumpfförmige Einsenkung entsteht. Das Material des Bodenabschnittes 26a''' wird somit durch die radiale Ausdehnung des Gegenstückes 62 noch weiter nach außen verdrängt, so daß der entstehende Ringwulst 23a einen noch größeren Durchmesser erhält.

Fig. 19 zeigt eine sechste Ausführungsform der Erfindung, die nur geringfügig gegenüber der fünften Ausführungsform gemäß den Fig. 17 und 18 abgewandelt ist.

Bei der Ausführungsform gemäß Fig. 19 ist nämlich das Heiz- und Druckwerkzeug 443 mit einem konischen Gegenstück 65 versehen, das ähnlich dem Gegenstück 62 der Fig. 17 und 18 ausgebildet, jedoch axial etwas kürzer ausgeführt ist.

Bei vollständig niedergegangenem Heiz- und Druckwerkzeug 443 steht somit das Gegenstück 65 im axialen Abstand vom Stempel 60, der wiederum fast vollständig in die Vorrichtung 431a eingeschoben wurde. Zwischen konischem Gegenstück 65 und Stempel 66 verbleibt in diesem Fall ein Boden 66 von beliebig einstellbarer Dicke. Das Material des Bodens 66 fehlt somit zur Ausbildung der Ringwulst 23a, die in diesem Falle einen etwas kleineren Durchmesser hat als der Ringwulst 23a beim Ausführungsbeispiel der Fig. 17 und 18.

Eine weitere Abwandlung ergibt sich gemäß der siebten Ausführungsform der Erfindung, die in Fig. 20 dargestellt ist.

Bei dieser Ausführungsform ist das Heiz- und Druckwerkzeug 543 mit einem Gegenstück 68 von zylindrischer Formgebung versehen. Die Vorrichtung 531a ist gegenüber der der Fig. 17, 18 und 19 unverändert.

Man erkennt, daß die Ausführungsform gemäß Fig. 20 ganz ähnlich derjenigen gemaß Fig. 19 wirkt, lediglich der größere Rauminhalt des zylindrischen Gegenstücks 68, verglichen mit dem konischen Gegenstück 65 hat die Wirkung, daß wiederum mehr Material des Bodenabschnittes in den Bereich der Ringwulst 23a umgeformt bzw. verdrängt wird, so daß der Ringwulst 23a in diesem Falle wiederum einen größeren Durchmesser aufweist.

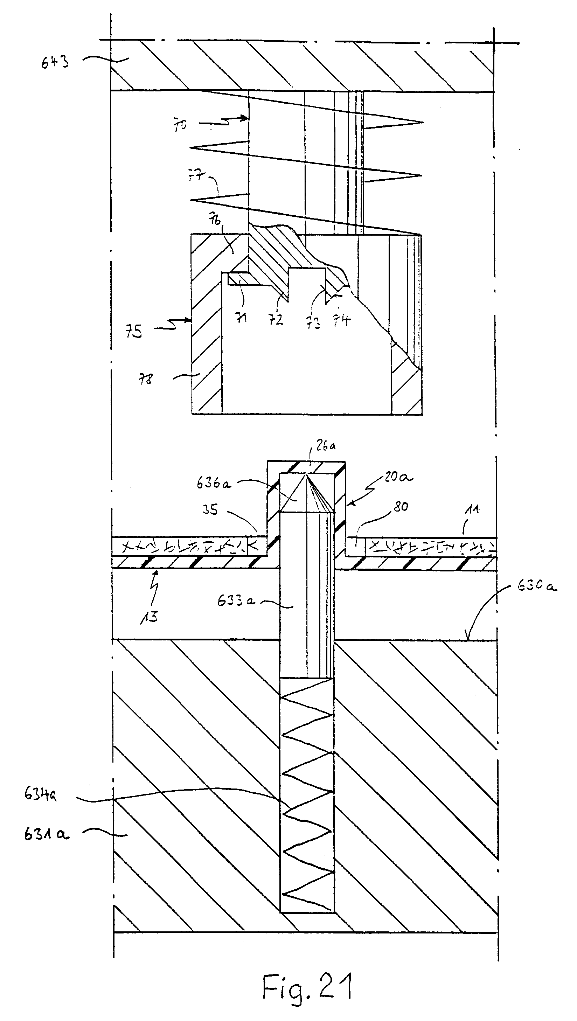

In den Fig. 21 bis 23 ist eine siebte Ausführungsform der Erfindung dargestellt.

Wie man aus Fig. 21 erkennen kann, ist an dem Heiz- und Druckwerkzeug 643 ein Oberwerkzeug 70 angeordnet, das ebenfalls heizbar ausgeführt sein kann (nicht dargestellt).

Das Oberwerkzeug 70 besteht im wesentlichen aus einem nach unten weisenden zylindrischen Teil, das im Bereich seines unteren Endes mit einer Ringschulter 71 versehen ist. Über die Ringschulter 71 steht nach unten noch ein ringförmiger Vorsprung 72 vor. Der ringförmige Vorsprung 72 ist zentrisch mit einer zylindrischen Ausnehmung 73 versehen. Außen ist der ringförmige Vorsprung 72 mit einem Außenkonus 74 versehen, so daß der ringförmige Vorsprung 72 nach unten insgesamt in eine kreisförmige Schneidkante ausläuft.

Das Oberwerkzeug 70 ist ferner mit einem topfförmigen Niederhalter 75 versehen, dessen Boden 76 auf dem zylindrischen Abschnitt des Oberwerkzeuges läuft und in seiner unteren Endlage von der Ringschulter 71 gekontert wird. In dieser Lage wird der Niederhalter 75 durch eine Feder 77 gehalten, die den zylindrischen Abschnitt des Oberwerkzeugs 70 umschließt und der Niederhalter 75 damit elastisch gegen das Heiz- und Druckwerkzeug 643 abstützt.

Nach unten gesehen hat der Niederhalter 75 die Form eines Hohlzylinders 78, der sich nach unten öffnet und einen Weg für die Elemente 71 bis 74 am unteren Ende des Oberwerkzeugs 70 frei gibt.

Bei der in Fig. 21 dargestellten Situation befinden sich die Rückkartonplatte 11 und die Folienhaube 13 im Abstand von der Auflagefläche 630a der Vorrichtung 631a. In dieser Position werden sie vom Stempel 633a gehalten, der wie der Stempel 33a bei der Ausführungsform der Fig. 5 bis 8 gestaltet ist und sich ebenfalls über eine Feder 634a abstützt.

Beim Ausführungsbeispiel der Fig. 21 bis 23 ist mit 80 ein Zwischenraum bezeichnet, den die Aussparung 35 zum Vorsprung 20a einnimmt. Ein solcher Zwischenraum 80 entsteht dann, wenn man aus Gründen der Montagetoleranzen vermeiden möchte, die Aussparungen 35 exakt paßgenau zu den Vorsprüngen 20a auszubilden, weil es dann nämlich schwierig sein kann, die Rückkartonplatte 11 mit der Folienhaube 13 zu verbinden. Dies kann beispielsweise dann der Fall sein, wenn sich infolge eines Temperaturwechsels die Rückkartonplatte 11 und die Folienhaube 13 unterschiedlich stark ausdehnen bzw. zusammenziehen. Andererseits ist es erforderlich, den Zwischenraum 80 nach der jeweils erforderlichen Größe zu berücksichtigen, wenn es an die Umformung der Vorsprünge 20a geht.

Bei der Darstellung in Fig. 21 liegt die Spitze 636a des Stempels 633a an der Innenseite des Bodenabschnittes 26a des Vorsprunges 20a an.

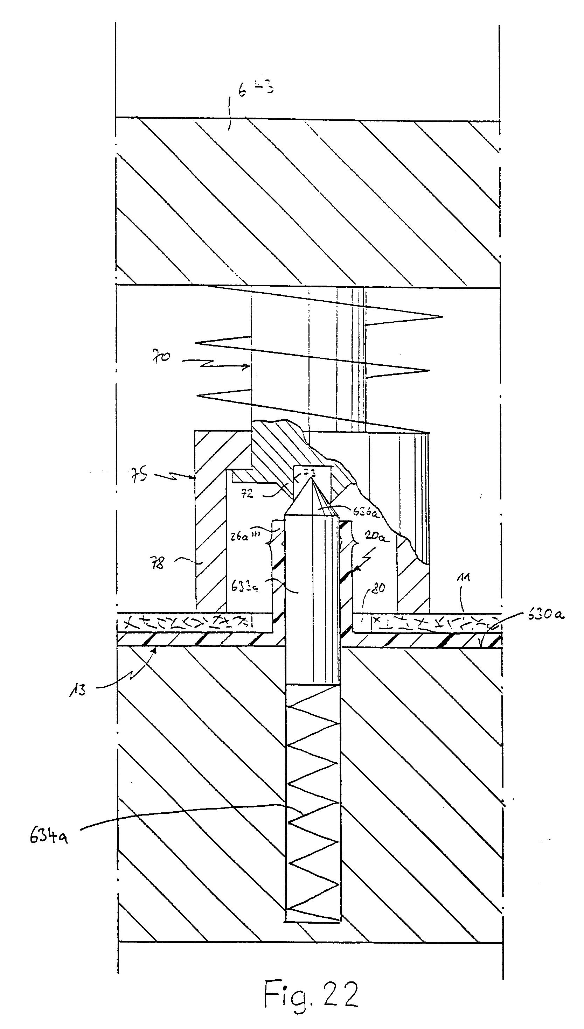

Fig. 22 zeigt ein weiteres Phasenbild, bei dem das Heiz- und Druckwerkzeug 643 nach unten verfahren wurde und zwar derart, daß der Niederhalter 75 mit dem Hohlzylinder 78 ringförmig um den Vorsprung 20a aufgesetzt und die Rückkartonplatte 11 mit der Folienhaube 13 nach unten auf die Auflagefläche 630a gedrückt hat.

Wegen der Steifigkeit der Feder 634a ist der Stempel 633a mit seiner Spitze 636a axial näherungsweise stehengeblieben, so daß die Spitze 636a den Bodenabschnitt 26a''' in der bereits mehrfach erläuterten Weise aufgerissen und hohlzylindrisch umgeformt hat.

Der ringförmige Vorsprung 72 des Oberwerkzeuges 70 hat in dem in Fig. 22 dargestellten Zustand entlang einer Kreislinie auf der Spitze 636a aufgesetzt, die im übrigen in die zylindrische Ausnehmung 73 eingetreten ist.

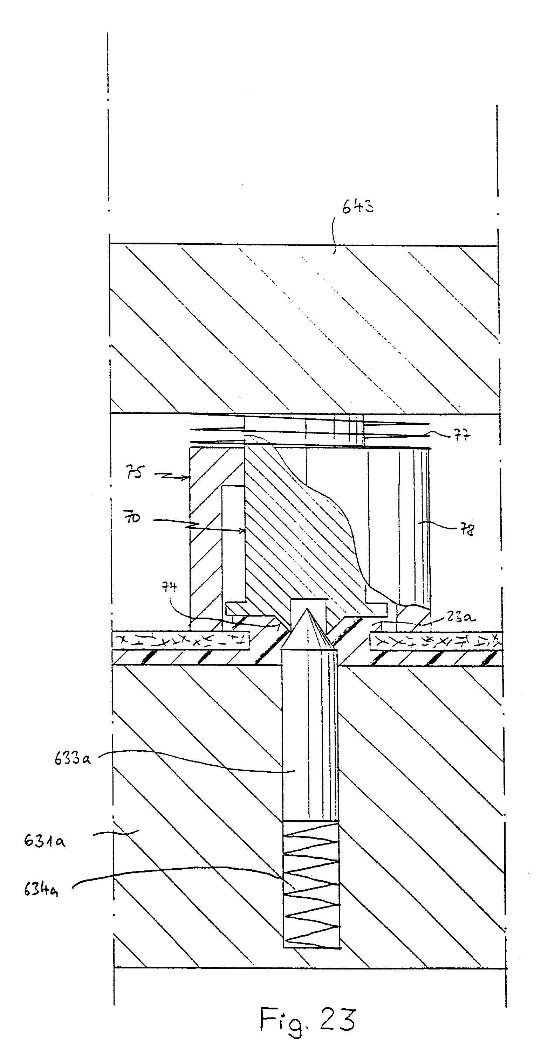

Wenn nun das Heiz- und Druckwerkzeug 643 weiter nach unten verfahren wird, so wird, wie Fig. 23 zeigt, die Feder 77 zusammengedrückt und das Oberwerkzeug 70 fährt durch den Niederhalter 75 nach unten weiter. Da die Betätigungskraft des Heiz- und Druckwerkzeuges 643 die Federkraft der Feder 634a übersteigt, wird diese komprimiert, so daß der Stempel 633a in die Vorrichtung 631a eingeschoben wird.

Aufgrund der Formgebung am unteren Ende des Oberwerkzeuges 70 (Elemente 71 bis 74) wird nun eine Ringwulst 23a ausgebildet, die einerseits den Zwischenraum 80 vollkommen ausfüllt und andererseits im zentralen Bereich eine konische Einsenkung infolge des Außenkonus 74 erfährt, so daß ähnlich wie beim Ausführungsbeispiel der Fig. 17 bis 19 eine zusätzliche Verdrängung von Material in den Bereich der Randwulst 23a auftritt.

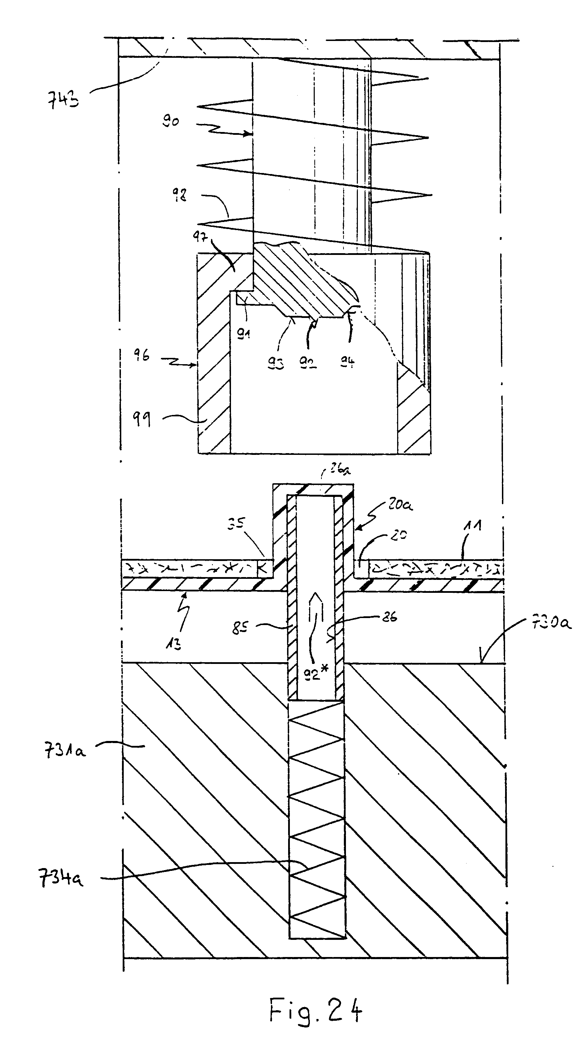

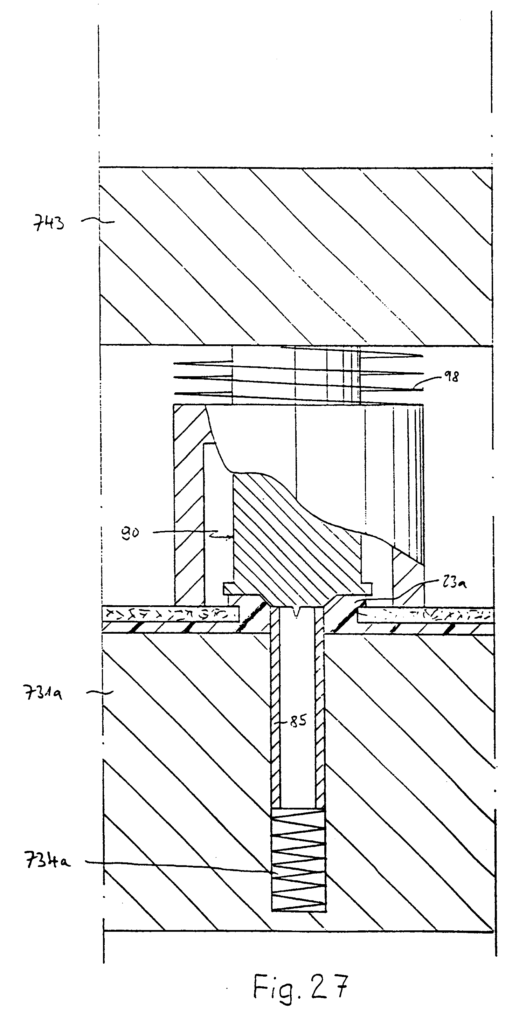

Die Fig. 24 bis 27 zeigen eine neunte Ausführungsform der Erfindung, die ähnlich der achten Ausführungsform gemäß den Fig. 21 bis 23 ausgeführt ist.

In Fig. 24 ist zu erkennen, daß in der Vorrichtung 731a ein Stempel 85 gegen die Kraft einer Feder 734a läuft, der hohlzylindrisch ausgebildet ist, also eine durchgehende Innenbohrung 86 aufweist.

Der Stempel 85 hält in der in Fig. 24 dargestellten Ausgangsposition die Rückkartonplatte 11 mit der Folienhaube 13 im Abstand von der Auflagefläche 730a der Vorrichtung 731a. Auch in diesem Falle ist mit 80 ein Zwischenraum zwischen Aussparung 35 und Vorsprung 20a eingezeichnet.

Das Heiz- und Druckwerkzeug 743 ist auch bei dieser Ausführungsform der Erfindung mit einem Oberwerkzeug 90 versehen, das einen langgestreckt zylindrischen Abschnitt hat, der unten in eine Ringschulter 91 ausläuft. Zentrisch ist das Oberwerkzeug 90 mit einer nach unten weisenden Spitze 92 versehen, die von einer ebenen Ringfläche 93 und weiter nach außen von einer konischen Ringfläche 94 umgeben ist. Von der Ringschulter 91 an verjüngt sich daher das Oberwerkzeug 90 bis zur Spitze 92.

Ein Niederhalter 96 mit einem Boden 97 ist über eine Feder 98 am Heiz- und Druckwerkzeug 743 abgestützt, so daß sich ein Hohlzylinder 99 des Niederhalters 96 nach unten öffnet. Insoweit entspricht der Niederhalter 96 vollkommen dem Niederhalter 75 des zuletzt erläuterten Ausführungsbeispiels der Fig. 21 bis 23.

Wenn das Heiz- und Druckwerkzeug 743 nach unten fährt, dann setzt der Hohlzylinder 99 des Niederhalters 96 wiederum auf einer Kreisringfläche um den Vorsprung 20a herum auf der Rückkartonplatte 11 auf. Da der Stempel 85 an seiner Oberseite nicht spitz ausgebildet ist, wird der Bodenabschnitt 26a des Vorsprunges 20a nicht durchstoßen. Das Niederfahren des Niederhalters 96 hat vielmehr zur Folge, daß auf die Rückkartonplatte 11 eine Niederhaltekraft ausgeübt wird, wie mit Pfeilen 100 angedeutet.

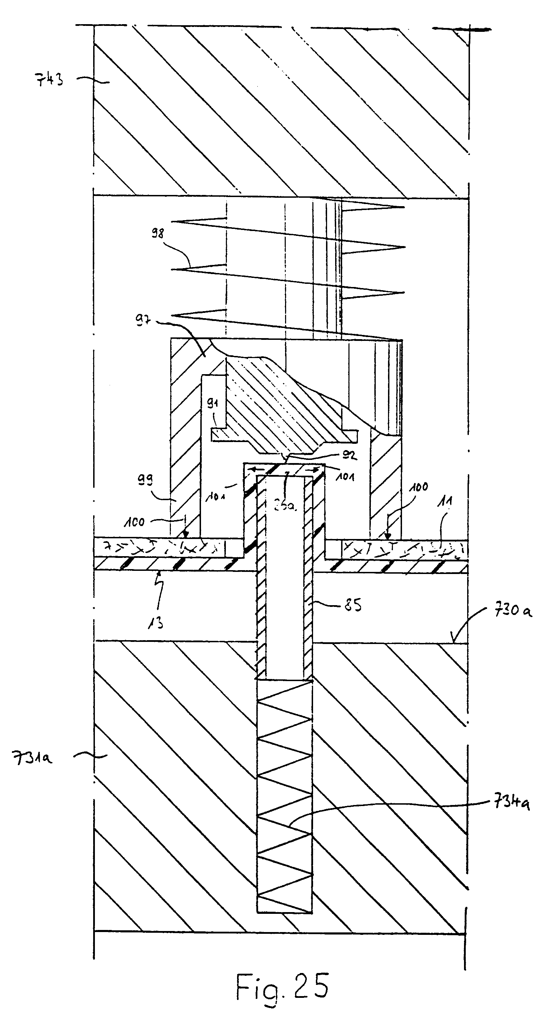

Dies wiederum bewirkt, daß im Bodenabschnitt 26a nach außen weisende Zugspannungen erzeugt werden, wie mit Pfeilen 101 in Fig. 25 angedeutet.

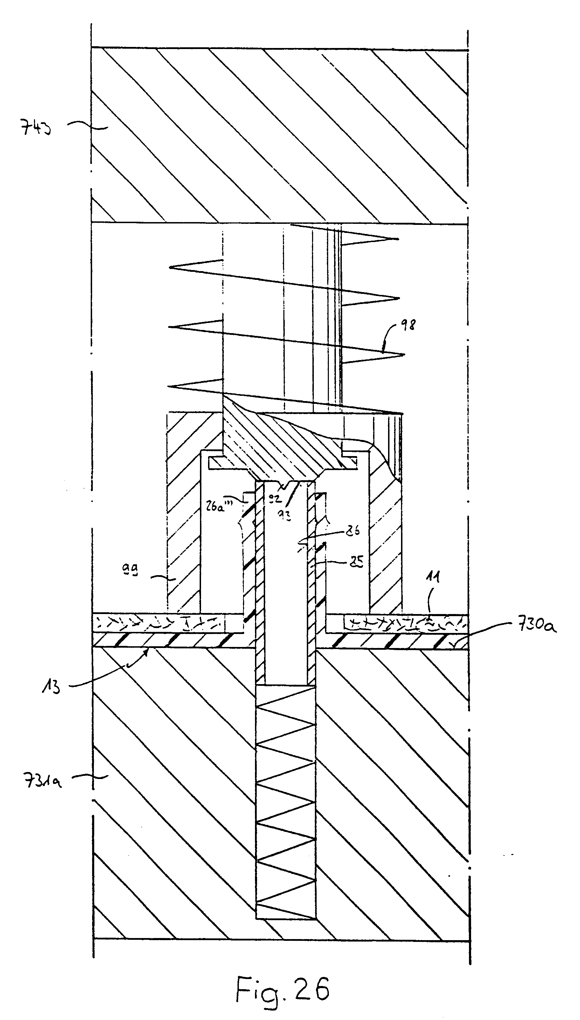

Auf den unter diesen Zugspannungen stehenden Bodenabschnitt 26a trifft nun bei weiterem Niedergehen des Heiz- und Druckwerkzeuges 743 die Spitze 92 des Oberwerkzeuges 90 auf. Sobald dies der Fall ist, zerreißt der Bodenabschnitt 26a schlagartig und formt sich hohlzylindrisch um, wie in Fig. 26 mit 26a''' dargestellt. Auch hierbei ist selbstverständlich Voraussetzung, daß die Federkonstante der Feder 734a so bemessen ist, daß die Feder 734a nicht vom niedergehenden Oberwerkzeug 90 überdrückt wird.

Es versteht sich, daß bei einer Variante dieses Ausführungsbeispiels die Spitze auch an der Vorrichtung 731a angeordnet sein kann, wie mit 92* angedeutet.

Dies ist erst ab dem Zustand gemäß Fig. 26 der Fall. Beim Zustand gemäß Fig. 26 liegt die ebene Ringfläche 93 auf der oberen Stirnfläche des hohlzylindrischen Stempels 85 auf und die Spitze 92 ist in die Innenbohrung 86 eingetreten.

Wenn nun das Oberwerkzeug 90 weiter nach unten verfahren und die Feder 734a überdrückt wird, wird der Stempel 85 in die Vorrichtung 731a eingedrückt, wobei die Unterseite des Oberwerkzeuges 90 den Bodenabschnitt 26a''' aus Fig. 26 in der Ringwulst 23a umformt. Auch in diesem Falle entsteht wieder eine Formgebung, die weitgehend derjenigen gemäß den Fig. 23 bzw. 17 bis 19 entspricht. Auch der Zwischenraum 80 ist wiederum ausgefüllt worden.

Schließlich zeigt Fig. 28 noch eine Variante der Erfindung, bei der ein Vorsprung 20a* mit einem Bodenbereich 26a* versehen ist, der eine gewölbte Form hat. Diese Wölbung kann den Prozeß des Aufreißens des Vorsprunges 20a* unterstützen, wenn beispielsweise bei der in Fig. 28 gezeigten Wölbung ein spitzer Stempel von unten auf die konvexe Oberfläche des Bodenabschnittes 26a* auftrifft. Insbesondere gilt dies selbstverständlich dann, wenn in der in Fig. 25 dargestellten Weise Zugspannungen in dem gewölbten Bodenabschnitt 26a* erzeugt werden.

## Patentansprüche

1. Verfahren zum Herstellen einer Verpackung, bei dem ein erstes, im wesentlichen flaches Teil aus einem ersten Werkstoff mit einem zweiten Teil aus Kunststoff lösbar verbunden wird, wobei das zweite Teil einen gewölbten Abschnitt und einen flachen Randbereich aufweist, insbesondere zum Herstellen einer Blisterverpackung (10), bei der eine Rückkartonplatte (11) mit einer Kunststoff-Folienhaube (13) lösbar verbunden ist, mit den Schritten:
a) Anbringen von Aussparungen (35) in dem einen Teil;
b) Anbringen von kappenförmigen Vorsprüngen (20) in einem flachen Abschnitt des aus Kunststoff bestehenden zweiten Teils, wobei die Vorsprünge (20) einen zylindrischen Hohlraum (22) und einen Bodenabschnitt (26) aufweisen;
c) Zusammenfügen der Teile derart, daß die Vorsprünge (20) sich durch die Aussparungen (35) hindurch erstrecken und abschnittsweise über diese vorstehen; und
d) Umformen der vorstehenden Abschnitte durch Andrücken mittels erster Stempel (43, 62, 63, 65, 68, 70, 90) zu verbreiterten Wülsten (23), die Ränder der Aussparungen (35) des einen Teils umgreifen,
dadurch gekennzeichnet, daß
e) beim Umformen der Vorsprünge (20) die zylindrischen Innenräume (22) mit einem zylindrischen zweiten Stempel (33a; 33b; 50, 53; 60; 85; 233a; 633a) ausgefüllt werden, so daß der Kunststoff des Bodenabschnittes (26) zur vergrößerten Ausbildung der Wülste (23) in einer zur Ebene des ersten Teils parallelen Ebene umgeformt wird.

2. Verfahren nach Anspruch 1, dadurch gekennzeichnet, daß nach dem Anbringen und vor dem Umformen der Vorsprünge (20) die Bodenabschnitte (26) durchstoßen werden, derart, daß aus den kappenförmigen Vorsprüngen (20a') hohlzylindrische Elemente (20a''') entstehen.

3. Verfahren nach Anspruch 2, dadurch gekennzeichnet, daß der erste oder zweite Stemple (33a; 53; 90; 233a; 633a) spitz ausgebildet ist und daß die Bodenabschnitte (26) mittels des spitzen Stempels (33a; 53; 90; 233a; 633a) durchstoßen werden.

4. Verfahren nach Anspruch 2 oder 3, dadurch gekennzeichnet, daß die Bodenabschnitte (26) vor dem Durchstoßen unter mechanische Zugspannung (101) gesetzt werden.

5. Vorrichtung zum Herstellen einer Verpackung, bei der ein erstes, im wesentlichen flaches Teil aus einem ersten Werkstoff mit einem zweiten Teil aus Kunststoff lösbar verbunden wird, wobei das zweite Teil einen gewölbten Abschnitt und einen flachen Randbereich aufweist, insbesondere zum Herstellen einer Blisterverpackung (10), bei der eine Rückkartonplatte (11) mit einer Kunststoff-Folienhaube (13) lösbar verbunden ist, mit:
a) einer Auflagefläche (30; 630a; 730a);
b) ersten Mitteln zum Auflegen des zweiten Teils auf die Auflage (30; 630a; 730a), wobei in einem flachen Abschnitt des aus Kunststoff bestehenden zweiten Teils angebrachte, einen Bodenabschnitt (26) sowie einen zylindrischen Hohlraum (22) aufweisende, kappenförmige Vorsprünge (20) von der Auflagefläche (30; 630a; 730a) weg weisen;
c) Zweiten Mitteln zum Auflegen des ersten Teils auf das zweite Teil, derart, daß die Vorsprünge (20) des zweiten Teils durch in dem ersten Teil angebrachte Aussparungen (35) hindurchreichen und abschnittsweise darüber vorstehen; und
d) ersten Stempeln (43, 62, 63, 65, 68, 70, 90) zum Andrücken und Umformen der vorstehenden Abschnitte zu verbreiterten Wülsten (23), die Ränder der Aussparungen (35) des ersten Teils umgreifen,
gekennzeichnet durch
e) senkrecht zu der Auflagefläche (30; 630a; 730a) in Richtung auf die ersten Stempel verfahrbare, in die Vorsprünge einführbare zweite Stempel (33a; 33b; 50, 53; 60; 85; 233a; 633a), die in ihrem Querschnitt dem Querschnitt des zylindrischen Innenraums (22) der hohl ausgebildeten Vorsprünge (20) angepaßt sind, zum Umformen des Kunststoffes des Bodenabschnittes (26) zur vergrößerten Ausbildung der Wülste (23) in einer zur Ebene des ersten Teils parallelen Ebene.

6. Vorrichtung nach Anspruch 5, dadurch gekennzeichnet, daß die zweiten Stempel (33a; 33b; 53; 60; 85; 233a; 633a) gegen die Kraft einer ersten Feder (34a; 34b; 52, 134a; 334a; 734a) verfahrbar sind.

7. Vorrichtung nach Anspruch 5 oder 6, dadurch gekennzeichnet, daß die ersten oder zweiten Stempel (33a; 53; 90; 233a; 633a) mit einer Spitze (36; 54; 92; 236a; 636a) versehen sind.

8. Vorrichtung nach Anspruch 7, dadurch gekennzeichnet, daß die ersten und die zweiten Mittel baulich vereinigt sind und das zweite Teil zusammen mit dem ersten Teil auf die Auflagefläche (30a) auflegen, wobei eine Auflegekraft (40) außerhalb der Vorsprünge (20a) bzw. Aussparungen (35) derart aufgebracht wird, daß die Bodenabschnitte (26a) der Vorsprünge (20a) beim Auflegen von den Spitzen (36; 54; 92; 636a) durchbohrt werden.

9. Vorrichtung nach einem oder mehreren der Ansprüche 5 bis 8, dadurch gekennzeichnet, daß die zweiten Stempel einen Innenstempel (53) und einen dazu konzentrischen Außenstempel (50) umfassen, die axial gegeneinander beweglich sind.

10. Vorrichtung nach einem oder mehreren der Ansprüche 5 bis 9, dadurch gekennzeichnet, daß die zweiten Stempel (33a; 33b; 50; 53; 60; 85; 233a; 633a) in einer Bohrung (32; 132a; 232a; 332a) in der Auflagefläche (30; 630a; 730a) laufen.

11. Vorrichtung nach einem oder mehreren der Ansprüche 5 bis 10, dadurch gekennzeichnet, daß die ersten Stempel (62; 65; 68; 70; 90) an einem relativ zur Auflagefläche (30; 630a; 730a) beweglichen Druck- und Heizwerkzeug (43; 143; 243; 343; 443; 543; 643) angeordnet sind.

12. Vorrichtung nach Anspruch 10 oder 11, dadurch gekennzeichnet, daß die ersten Stempel mit einem formgebenden Gegenstück (62; 65; 68; 72; 93, 94) versehen sind, das beim Umformen des Materials des Bodenabschnittes (26) eine Einsenkung (63) erzeugt.

13. Vorrichtung nach Anspruch 11 oder 12, dadurch gekennzeichnet, daß als zweiter Stempel ein erster, in den Innenraum (22) greifender, hohler und gegen die Kraft einer Feder (734a) abgestützter Stempel (85) vorgesehen ist, der die Teile im Abstand von einer Auflage hält, daß ein Niederhalter (96) die Teile gegen die Kraft der Feder (734a) mit einer Niederhaltekraft (100) hält, derart, daß im Bodenabschnitt (26a) mechanische Zugspannungen (101) entstehen und daß eine Spitze (92, 92*) zum Aufreißen des unter Zugspannung (101) stehenden Bodenabschnittes (26a) vorgesehen ist.

## Claims

1. Process for producing a pack, in the case of which a first, essentially flat part consisting of a first material is connected releasably to a second part consisting of plastic, the second part exhibiting an arched section and a flat border region, in particular for producing a blister pack (10), in the case of which a rear cardboard panel (11) is connected releasably to a plastic-sheeting cap (13), by the following steps:
a) providing clearances (35) in one part;
b) providing cap-like protrusions (20) in a flat section of the plastic second part, the protrusions (20) exhibiting a cylindrical cavity (22) and a base section (26);
c) joining the parts together such that the protrusions (20) extend through the clearances (35) and project beyond these in certain areas; and
d) deforming the projecting sections by pressing on them by means of first dies (43, 62, 63, 65, 68, 70, 90) to produce widened beads (23) which engage around borders of the clearances (35) of one part,
characterized in that
e) upon deformation of the protrusions (20), the cylindrical interiors (22) are filled by a cylindrical second die (33a; 33b; 50, 53; 60; 85; 233a; 633a), with the result that the plastic of the base section (26), for an enlarged formation of the beads (23) is deformed in a plane parallel to the plane of the first part.

2. Process according to Claim 1, characterized in that, after the provision, and before the deformation, of the protrusions (20), the base sections (26) are penetrated such that hollow-cylindrical elements (20a''') are produced from the cap-like protrusions (20a').

3. Process according to Claim 2, characterized in that the first or second die (33a; 53; 90; 233a; 633a) is of a pointed design, and in that the base sections (26) are penetrated by means of the pointed die (33a; 53; 90; 233a; 633a).

4. Process according to Claim 2 or 3, characterized in that, before the penetration, the base sections (26) are subjected to mechanical tensile stressing (101).

5. Apparatus for producing a pack, in the case of which a first, essentially flat part consisting of a first material is connected releasably to a second part consisting of plastic, the second part exhibiting an arched section and a flat border region, in particular for producing a blister pack (10), in the case of which a rear cardboard panel (11) is connected releasably to a plastic-sheeting cap (13), having:
a) a rest surface (30; 630a; 730a);
b) a first means for resting the second part on the rest (30; 630a; 730a), cap-like protrusions (20) which are provided in a flat section of the plastic second part and exhibit a base section (26) and a cylindrical cavity (22) being oriented away from the rest surface (30; 630a; 730a);
c) second means for resting the first part on the second part such that the protrusions (20) of the second part extend through clearances (35), provided in the first part, and project beyond these in certain areas; and
d) first dies (43, 62, 63, 65, 68, 70, 90) for pressing on the projecting sections and deforming them to produce widened beads (23) which engage around borders of the clearances (35) of the first part,
characterized by
e) second dies (33a; 33b; 50, 53; 60; 85; 233a; 633a) which can be displaced perpendicularly with respect to the rest surface (30; 630a; 730a), in the direction of the first dies, can be introduced into the protrusions and are adapted in cross-section to the cross-section of the cylindrical interior (22) of the hollow protrusions (20), in order to deform the plastic of the base section (26), for an enlarged formation of the beads (23), in a plane parallel to the plane of the first part.

6. Apparatus according to Claim 5, characterized in that the second dies ((33a; 33b; 53; 60; 85; 233a; 633a) can be displaced counter to the force of a first spring (34a; 34b; 52, 134a; 334a; 734a).

7. Apparatus according to Claim 5 or 6, characterized in that the first or second dies (33a; 53; 90; 233a; 633a) are provided with a tip (36; 54; 92; 236a; 636a).

8. Apparatus according to Claim 7, characterized in that the first and the second means are structurally combined and rest the second part, together with the first part, on the rest surface (30a), a bearing force (40) being applied outside the protrusions (20a) and clearances (35) such that the base sections (26a) of the protrusions (20a) are penetrated when the tips (36; 54; 92; 636a) are applied.

9. Apparatus according to one or more of Claims 5 to 8, characterized in that the second dies comprise an inner die (53) and an outer die (50) concentric thereto, it being possible for the two dies to be moved axially with respect to one another.

10. Apparatus according to one or more of Claims 5 to 9, characterized in that the second dies (33a; 33b; 50; 53; 60; 85, 233a; 633a) run in a bore (32; 132a; 232a; 332a) in the rest surface (30; 630a; 730a).

11. Apparatus according to one or more of Claims 5 to 10, characterized in that the first dies (62; 65; 68; 70; 90) are arranged on a pressure-exerting and heating tool (43; 143; 243; 343; 443; 543; 643) which can be moved relative to the rest surface (30; 630a; 730a).

12. Apparatus according to Claim 1 or 11, characterized in that the first dies are provided with a shaping counter-piece (62; 65; 68; 72; 93, 94) which, upon deformation of the material of the base section (26), produces a hollow (63).

13. Apparatus according to Claim 11 or 12, characterized in that there is provided, as second die, a first hollow die (85) which engages into the interior (22), supported counter to the force of a spring (734a) and retains the parts at a distance from a rest, in that a holding-down device (96) retains the parts counter to the force of the spring (734a) with a holding-down force (100) such that mechanical tensile stressing (101) is produced in the base section (26a), and in that provision is made for a tip (92, 92*) for breaking through the base section (26a) subjected to tensile stressing (101).

## Revendications

1. Procédé pour fabriquer un emballage, dans lequel une première pièce essentiellement plane, constituée par un premier matériau, est reliée de façon amovible à une seconde pièce en matière plastique, la seconde pièce présentant une partie bombée et une région périphérique plane, en particulier pour fabriquer un emballage thermoformé ou blister (10), dans lequel un dos en carton (11) est relié de façon amovible à une coque en film plastique (13), par les étapes suivantes :
a) Réalisation d'évidements (35) dans la première pièce ;
b) Réalisation d'éléments en saillie (20) en forme de cuvette dans une partie plane de la seconde pièce en matière plastique, les éléments en saillie (20) présentant un espace creux (22) de forme cylindrique et un fond (26) ;
c) Assemblage des pièces de telle sorte que les éléments en saillie (20) passent à l'intérieur des évidements (35) en dépassant en partie au-dessus de ceux-ci ; et
d) Déformation des parties en dépassement par pressage au moyen de premiers poinçons (43, 62, 63, 65, 68, 70, 90) pour obtenir des rebords élargis (23) qui enserrent les bords des évidements (35) de la première pièce,
caractérisé en ce que :
e) lors de la déformation des éléments en saillie (20), un second poinçon cylindrique (33a ; 33b ; 50, 53 ; 60 ; 85 ; 233a ; 633a) pénètre dans les espaces intérieurs cylindriques (22), de telle sorte que la matière plastique du fond (26) est déformée dans un plan parallèle au plan de la première pièce, pour former des rebords élargis (23).

2. Procédé selon la revendication 1, caractérisé en ce que, après la réalisation et avant la transformation des éléments en saillie (20), les fonds (26) sont transpercés, de telle sorte que l'on obtienne, à partir des éléments en saillie en forme de cuvette (20a'), des éléments (20a''') en forme de cylindre creux.

3. Procédé selon la revendication 2, caractérisé en ce que le premier ou le second poinçon (33a ; 53 ; 90 ; 233a ; 633a) est de forme pointue et en ce que les fonds (26) sont transpercés par le poinçon pointu (33a ; 53 ; 90 ; 233a ; 633a).

4. Procédé selon l'un ou l'autre des revendications 2 ou 3, caractérisé en ce que les fonds (26) sont soumis, avant leur percement, à une contrainte mécanique de traction (101).

5. Dispositif pour fabriquer un emballage, dans lequel une première pièce essentiellement plane, constituée par un premier matériau, est reliée de façon amovible à une seconde pièce en matière plastique, la seconde pièce présentant une partie bombée et une région périphérique plane, en particulier pour fabriquer un emballage thermoformé ou blister (10), dans lequel un dos en carton (11) est relié de façon amovible à une coque en film plastique (13), ce dispositif comportant :
a) une surface d'appui (30 ; 630a ; 730a) ;
b) un premier moyen pour disposer la seconde pièce sur la surface d'appui (30 ; 630a ; 730a), la seconde pièce en matière plastique étant dotée, dans une partie plane, d'éléments en saillie (20) en forme de cuvette dépassant de la surface d'appui (30 ; 630a ; 730a) et constitués par un fond (26) et par un espace intérieur de forme cylindrique (22) ;
c) un second moyen pour disposer la première pièce sur la seconde pièce, de telle sorte que les éléments en saillie (20) de la seconde pièce passent à l'intérieur des évidements (35) ménagés dans la première pièce, en dépassant en partie au-dessus de ceux-ci ; et
d) des premiers poinçons (43, 62, 63, 65, 68, 70, 90) pour presser et déformer des parties en dépassement pour former des rebords élargis (23) qui enserrent les bords des évidements (35) de la première pièce,
caractérisé en ce que :
e) les seconds poinçons (33a ; 33b ; 50, 53 ; 60 ; 85 ; 233a ; 633a), prévus pour être introduits dans les éléments en saillie (20) et pour se déplacer en direction des premiers poinçons perpendiculairement à la surface d'appui (30 ; 630a ; 730a), ont une section transversale adaptée à la section transversale de l'espace intérieur cylindrique (22) des éléments en saillie (20) de forme creuse, pour déformer la matière plastique du fond (26) en formant des rebords (23) plus larges, dans un plan parallèle au plan de la première pièce.

6. Dispositif selon la revendication 5, caractérisé en ce que les seconds poinçons (33a ; 33b ; 53 ; 60 ; 85 ; 233a ; 633a) peuvent se déplacer en s'opposant à l'action d'un premier ressort (34a ; 34b ; 52 , 134a ; 334a ; 734a).

7. Dispositif selon l'une ou l'autre des revendications 5 et 6, caractérisé en ce que les premiers ou les seconds poinçons (33a ; 53 ; 90 ; 233a ; 633a) sont dotés d'une pointe (36 ; 54 ; 92 ; 236a ; 636a).

8. Dispositif selon la revendication 7, caractérisé en ce que les premiers et les seconds moyens sont réunis par construction et que la seconde partie est disposée avec la première partie sur la surface d'appui (30a), une force d'appui (40) étant appliquée en dehors des éléments en saillie (20a) et des évidements (35) de telle sorte que les fonds (26a) des éléments en saillie (20a) sont perforés par l'application des pointes (36 ; 54 ; 92 ; 636a).

9. Dispositif selon une ou plusieurs des revendications 5 à 8, caractérisé en ce que les seconds poinçons se composent d'un poinçon intérieur (53) et d'un poinçon extérieur (50) concentrique au premier, mobiles l'un par rapport à l'autre dans le sens axial.

10. Dispositif selon une ou plusieurs des revendications 5 à 9, caractérisé en ce que les seconds poinçons (33a ; 33b ; 50 ; 53 ; 60 ; 85 ; 233a ; 633a) se déplacent dans un alésage (32 ; 132a ; 232a ; 332a) de la surface d'appui (30 ; 630a ; 730a).

11. Dispositif selon une ou plusieurs des revendications 5 à 10, caractérisé en ce que les premiers poinçons (62 ; 65 ; 68 ; 70 ; 90) sont disposés sur un outil de pression et de chauffage (43 ; 143 ; 243 ; 343 ; 443 ; 543 ; 643), mobile par rapport à la surface d'appui (30 ; 630a ; 730a).

12. Dispositif selon l'une ou l'autre des revendications 10 et 11, caractérisé en ce que les premiers poinçons comportent une contre-pièce (62 ; 65 ; 68 ; 72 ; 93, 94) de mise en forme qui, lors de la déformation de la matière du fond (26), lui donne une forme en creux (63).

13. Dispositif selon l'une quelconque des revendications 11 ou 12, caractérisé en ce qu'il est prévu, en tant que second poinçon, un premier poinçon (85) creux entrant dans l'espace intérieur (22) et s'appuyant en s'opposant à l'action d'un ressort (734a), qui maintient les pièces à distance d'une surface d'appui, en ce qu'une pièce d'abaissement (96) maintient les pièces en exerçant une force d'appui vers le bas (100) qui s'oppose à l'action du ressort (734a), de telle sorte que des contraintes mécaniques de traction (101) sont appliquées au fond (26a) et en ce qu'une pointe (92, 92') est prévue pour rompre le fond (26a) soumis à la contrainte de traction (101).
